# EUROPÄISCHE PATENTSCHRIFT

(11) **EP 4 549 255 B1**
(45) Veröffentlichungstag und Bekanntmachung des Hinweises auf die Patenterteilung: **02.12.2026**
(21) Anmeldenummer: 24208058.8
(22) Anmeldetag: 22.10.2024
(51) Int. Cl.: B60R 19/34, B60D 1/48, B60D 1/54

(54) **AUFPRALLABSORBIERENDER QUERTRÄGER**
IMPACT ABSORBING CROSS MEMBER
TRAVERSE ABSORBANT LES CHOCS

(30) Priorität: 30.10.2023 DE 102023129949
(43) Veröffentlichungstag der Anmeldung: 07.05.2025
(73) Patentinhaber: ACPS Automotive GmbH, 74379 Ingersheim (DE)
(72) Erfinder: Pietschmann, Ralf, 74369 Löchgau (DE)
(74) Vertreter: Hoeger, Stellrecht & Partner Patentanwälte mbB

(56) Entgegenhaltungen:
- CN-U- 218 907 162
- DE-A1- 102008 030 626
- DE-A1- 102017 125 468
- DE-A1- 102019 124 019
- DE-U1- 202009 006 345
- US-A1- 2003 052 493
- US-A1- 2014 367 982

## Beschreibung

Die Erfindung betrifft einen aufprallabsorbierenden Querträger, der unter einer Stoßfängereinheit einer Fahrzeugkarosserie an einem Heckbereich derselben montierbar ist, wobei der Querträger sich in einer parallel zur Stoßfängereinheit verlaufenden Querrichtung erstreckt und endseitig angeordnete Stützelemente zur Abstützung an Seitenbereichen der Fahrzeugkarosserie aufweist und wobei die Stützelemente durch eine Zentraleinheit des Querträgers miteinander verbunden sind.

Derartige Querträger sind aus dem Stand der Technik bekannt. US 2014/367982 A1 offenbart einen Aufprallabsorbierender Querträger gemäß dem Oberbegriff des Anspruchs 1.

Der Erfindung liegt die Aufgabe zugrunde, einen aufprallabsorbierenden Querträger zur Verfügung zu stellen, welcher in der Lage ist, einen Seitenaufprall zu absorbieren, ohne dass die Zentraleinheit Schaden nimmt und ohne dass auch die Fahrzeugkarosserie beschädigt wird.

Beispielsweise ist ein derartiger Heck-Schrägaufprall durch eine RCAR-Crashanforderung definiert, wobei die Forderung ist, dass der aufprallabsorbierende Querträger die Fahrzeugrohbaustruktur nicht beschädigen soll.

Diese Aufgabe wird mit einem aufprallabsorbierenden Querträger mit den Merkmalen des Anspruchs 1 gelöst.

Der Vorteil dieser Lösung ist darin zu sehen, dass dadurch die Möglichkeit besteht, über die Seitenaufprallelemente und die diese abstützenden Stoßenergieabsorptionselemente die Stoßenergie eines derartigen Heck-Schrägaufpralls zu absorbieren, ohne dass der Querträger mit den Stützelementen und der Zentraleinheit und somit auch nicht die Fahrzeugrohbaustruktur geschädigt werden.

Um die Stoßenergie optimal aufnehmen zu können, ist vorzugsweise vorgesehen, dass die Stoßenergieabsorptionselemente sich in einer Erstreckungsrichtung von dem jeweiligen Stützelement zu dem entsprechenden Seitenaufprallelement erstreckende vorgeformte Wandelemente aufweisen, die zur Stoßenergieabsorption faltbar sind, wobei durch die Faltung eine optimale Aufnahme der Stoßenergie möglich ist.

Insbesondere ist hierbei vorgesehen, dass Wandelemente der Stoßabsorptionselemente eine Vorprägung dergestalt aufweisen, dass diese zur Stoßenergieabsorption sich längs Faltlinien falten, die quer zur Erstreckungsrichtung der Stoßenergieabsorptionselemente von den Stützelementen zu den Seitenaufprallelementen verlaufen.

Durch diese Vorprägung der Stoßenergieabsorptionselemente lässt sich in besonders vorteilhafterweise die Energieabsorption und somit auch die Deformation der Stoßenergieabsorptionselemente vorgeben und, um definierte Verhältnisse für die Energieabsorption zu schaffen.

Eine konstruktiv günstige Lösung sieht vor, dass die Stoßenergieabsorptionselemente eine zur Erstreckungsrichtung parallele Mittelachse zumindest teilweise umgreifend ausgebildet sind, so dass durch die teilweise die Mittelachse umgreifende Struktur ebenfalls die Stoßenergie bei einer vorgebbaren Verformung der Stoßenergieabsorptionselemente vorteilhaft aufgenommen werden kann.

Noch besser ist es, wenn die Stoßenergieabsorptionselemente um die zur Erstreckungsrichtung parallele Mittelachse geschlossen umlaufend ausgebildet sind, um möglichst viel Stoßenergie bei möglichst definierbarer Verformung aufnehmen zu können.

Ferner ist es, um eine definierte Deformation der Stoßenergieabsorptionselemente zu erreichen von Vorteil, wenn die Stoßenergieabsorptionselemente für die Abstützung der Seitenaufprallelemente eine aufprallseitige Querschnittsfläche aufweisen, die kleiner ist als eine für die Abstützung an den Stützelementen vorgesehene abstützseitige Querschnittsfläche.

Hiermit lässt sich in besonders einfacher Weise ein definiertes Deformationsverhalten, insbesondere näherungsweise parallel zur Mittelachse vorgeben.

Noch besser lässt sich das Deformationsverhalten der Stoßenergieabsorptionselemente vorgeben, wenn diese sich in ihrer Erstreckungsrichtung von dem jeweiligen Stützelement zu dem jeweiligen Seitenaufprallelement verjüngend ausgebildet sind.

Diese kegelähnlich ausgebildete Struktur ermöglicht es, die Gesamtdeformation der Stoßenergieabsorptionselemente so vorzugeben, dass im Crashfall möglichst geringe Seitwärtsbewegungen zur Erstreckungsrichtung und/oder zur Mittelachse erfolgen.

Im Zusammenhang mit der bisherigen Erläuterung der erfindungsgemäßen Lösung wurde lediglich vorgegeben, dass die Seitenaufprallelemente über die Stoßenergieabsorptionselemente an den Stützelementen abgestützt werden.

Besonders günstig lässt sich die erfindungsgemäße Lösung dann ausbilden, wenn sich die Seitenaufprallelemente in einer Voraufprallstellung relativ zu der Zentraleinheit beweglich abstützen.

Eine derartige Abstützung an der Zentraleinheit erlaubt es, die Bewegung der Seitenaufprallelemente im Crashfall so zu beeinflussen, dass diese möglichst geringe Bewegungen in vertikaler und horizontaler Richtung relativ zur Zentraleinheit ausführen und somit auch zu einer vorgebbaren Deformation der Stoßenergieabsorptionselemente beitragen.

Dabei dient die bewegliche Abstützung der Seitenaufprallelemente relativ zur Zentraleinheit dazu, im Crashfall die Zentraleinheit nicht zu beschädigen, sondern lediglich zur Führung der Bewegung der Seitenaufprallelemente heranzuziehen.

Besonders günstig ist es, wenn die Seitenaufprallelemente zur Abstützung an der Zentraleinheit über eine gelenkige Verbindung, umfassend insbesondere einerseits ein Fortsatz und andererseits eine Aufnahme für den Fortsatz, beweglich abgestützt sind.

Diese gelenkige Verbindung der Seitenaufprallelemente relativ zur Zentraleinheit erlaubt es insbesondere, die Seitenaufprallelemente möglichst definiert zu führen.

Insbesondere schafft auch die Ausführung der gelenkigen Verbindung mittels eines Fortsatzes und einer diesen Fortsatz aufnehmenden Aufnahme die Möglichkeit, im Crashfall ausreichend Bewegungsspielraum für die Seitenaufprallelemente zu schaffen, insbesondere ohne die Zentraleinheit zu beschädigen.

Prinzipiell könnten der Fortsatz und die Aufnahme so ausgebildet sein, dass der Fortsatz lediglich zu Beginn eines Crashvorgangs sich in der Aufnahme abstützt und dann aus der Aufnahme löst.

Eine noch vorteilhaftere Lösung sieht jedoch vor, dass der jeweilige Fortsatz in der Voraufprallstellung in der Aufnahme gegen ein Verlassen der Aufnahme gesichert ist, so dass zumindest zu Beginn des Crashfalls der Fortsatz zunächst in der Aufnahme verbleibt.

Hinsichtlich der Ausbildung der Seitenaufprallelemente selbst wurden im Zusammenhang mit der bisherigen Erläuterung der einzelnen Ausführungsbeispiele keine näheren Angaben gemacht.

So sieht eine vorteilhafte Lösung vor, dass sich jedes der Seitenaufprallelemente in der Querrichtung über mindestens ein Viertel der Gesamtausdehnung des Querträgers in Querrichtung erstreckt, so dass der Querträger in der Lage ist, über eine nennenswert große Distanz einen Seitenaufprall durch eines der Seitenaufprallelemente aufzunehmen.

Noch günstiger ist es, wenn die Ausdehnung der Seitenaufprallelemente in der Querrichtung sich über mehr als ein Viertel der Gesamtausdehnung des Querträgers in der Querrichtung erstreckt.

Ferner ist, um ausreichend Raum für die Zentraleinheit zur Verfügung zu haben, vorgesehen dass sich jedes der Seitenaufprallelemente in der Querrichtung über maximal die Hälfte der Gesamtausdehnung des Querträgers in der Querrichtung erstreckt.

Vorzugsweise beträgt die Ausdehnung der Seitenaufprallelemente in der Querrichtung weniger als die Hälfte der Gesamtausdehnung des Querträgers in der Querrichtung, beispielsweise maximal ein Drittel der Gesamtausdehnung des Querträgers.

Zur Ausbildung der Seitenaufprallelemente wurden bislang keine näheren Angaben gemacht.

Vorzugsweise weisen die Seitenaufprallelemente sich in der Querrichtung verlaufende Sicken auf, um eine verbesserte Stabilität der Seitenaufprallelemente zu erreichen.

Hinsichtlich der Ausdehnung der Zentraleinheit wurden in diesem Zusammenhang keine näheren Angaben gemacht.

So ist vorzugsweise vorgesehen, dass sich die Seitenaufprallelemente sich im Anschluss an einen Mittelabschnitt der Zentraleinheit erstrecken, der in einem maximalen Abstand von einem durch die Seitenbereiche des Heckbereichs der Fahrzeugkarosserie definierten Abstützkontur für den Querträger verläuft.

Besonders günstig ist es, wenn die Zentraleinheit sich im Anschluss an den Mittelabschnitt in geringerem Abstand von einer durch die Lage der Stützelemente vorgegebenen Abstützkontur erstreckt, so dass im Crashfall für die Seitenaufprallelemente ausreichend Raum zu einer Bewegung in Richtung der Abstützkontur des Querträgers besteht.

Um ferner für die Stoßenergieabsorptionselemente ausreichend Raum zur Deformation im Crashfall zu schaffen, ist vorgesehen, dass die Stützelemente Abstützflächen für die Stoßenergieabsorptionselemente aufweisen, die einen Abstand von weniger als 10 mm von Karosserieabstützflächen der Stützelemente aufweisen, mit denen diese sich an den Seitenbereichen der Fahrzeugkarosserie abstützen.

Diese Lösung erfordert somit eine Ausbildung der Stützelemente, die extrem niedrig bauend ist.

Im einfachsten Fall lassen sich dabei die Stützelemente durch ein plattenähnlich geformtes Teil ausbilden.

Des Weiteren ist vorzugsweise vorgesehen, dass die Abstützflächen der Stoßenergieabsorptionselemente und die Karosserieabstützflächen der Stützelemente aufeinander gegenüberliegenden Seiten der Stützelemente angeordnet sind.

Besonders günstig ist es, wenn die Abstützflächen der Stützelemente für die Stoßenergieabsorptionselemente und die Karosserieabstützflächen der Stützelemente auf gegenüberliegenden Seiten einer Fußplatte der Stützelemente angeordnet sind.

Des Weiteren ist es, zur Stabilisierung der Stützelemente von Vorteil, wenn die Stützelemente außerhalb der Abstützflächen für die Stoßenergieabsorptionselemente Stabilisierungselemente aufweisen, welche die Formstabilität verbessern und somit insbesondere im Fall einer Fußplatte die Formstabilität der Stützelemente signifikant verbessern.

Vorzugsweise ist dabei vorgesehen, dass die Stabilisierungselemente sich quer zu der Abstützfläche erstreckende Stege aufweisen.

Derartige Stege können aus Flachmaterial oder auch aus geformten oder sickenähnlichem Material ausgebildet sein.

Besonders vorteilhaft ist es dabei, wenn die Stege aus Wandabschnitten der Stützelemente gebildet sind, da sich diese sehr einfach realisieren lassen.

Besonders zweckmäßig ist es, wenn die Stabilisierungselemente einstückig an die Fußplatte angeformt sind.

Eine besonders günstige Lösung sieht ferner vor, dass die sich quer zu den Abstützflächen erstreckenden Stege sich ausgehend von einer dem Zentralkörper abgewandten Seite in Richtung der Zentraleinheit mit zunehmender Ausdehnung quer zu der Abstützfläche erstrecken, das heißt von der Abstützfläche weg erstrecken.

Damit lassen sich in einfacher Weise stabile Strukturen herstellen.

Eine besonders günstige Lösung sieht vor, dass die sich quer zu der Abstützfläche erstreckenden Stabilisierungselemente einstückig mit der die Abstützfläche und die Karosserieabstützfläche bildenden Fußplatte ausgebildet sind, so dass dadurch mit geringem Fertigungsaufwand eine stabile Struktur erstellt werden kann.

Prinzipiell können dabei die einzelnen Stabilisierungselemente unabhängig voneinander sein. Eine besonders stabile Struktur lässt sich jedoch dann erreichen, wenn zumindest ein Teil der Stabilisierungselemente, insbesondere mindestens drei der Stabilisierungselemente, miteinander verbunden sind.

Im Zusammenhang mit der bisherigen Erläuterung der einzelnen Ausführungsbeispiele wurden keine näheren Angaben zur Ausbildung der Zentraleinheit gemacht.

Prinzipiell könnte die Zentraleinheit durch zwei Träger gebildet sein, die im Abstand voneinander verlaufen.

Erfindungsgemäß umfasst die Zentraleinheit eine kastenförmige Struktur.

Eine derartige kastenförmige Struktur hat den Vorteil, dass diese einerseits leichtbauend ist und andererseits eine hohe Steifigkeit aufweist, um eine möglichst große Stabilität im Bereich der Zentraleinheit zu erreichen. Besonders günstig ist es, wenn ein Teil der Stabilisierungselemente der Stützelemente mit Wänden der kastenförmigen Struktur der Zentraleinheit verbunden ist.

Damit lässt sich in besonders vorteilhafter Weise eine stabile Anbindung zwischen den Stützelementen und der Zentraleinheit schaffen.

Insbesondere ist es hierbei vorteilhaft, wenn die miteinander verbundenen Stabilisierungselementen mit Wänden der kastenförmigen Struktur verbunden sind, um somit eine mehrfache Verbindung zwischen den Stützelementen und der kastenförmigen Struktur der Zentraleinheit zu schaffen.

Hinsichtlich der Ausbildung der kastenförmigen Struktur wurden bislang keine näheren Angaben gemacht.

Erfindungsgemäß fasst die kastenförmige Struktur der Zentraleinheit in Fahrtrichtung gesehen, eine fahrzeugzugewandte Wand und eine fahrzeugabgewandte Wand auf, die insbesondere im Abstand voneinander verlaufen.

Ferner ist vorgesehen, dass die kastenförmige Struktur der Zentraleinheit eine fahrbahnabgewandte Wand aufweist.

Ergänzend hierzu ist vorzugsweise vorgesehen, dass die kastenförmige Struktur der Zentraleinheit eine fahrbahnzugewandte Wand aufweist.

Besonders günstig ist es, wenn die fahrzeugabgewandte Wand, die fahrzeugzugewandte Wand, die fahrbahnzugewandte Wand und die fahrbahnabgewandte Wand jeweils mit ihren Längsseiten aneinander anliegen und fest miteinander verbunden, insbesondere verschweißt, sind und somit eine geschlossene Trägerstruktur bilden.

Eine weitere vorteilhafte Ausführung sieht vor, dass die kastenförmige Struktur in einem mittigen Bereich mit einer Versteifung versehen ist.

Insbesondere ist dabei die kastenförmige Struktur mindestens im Bereich der fahrzeugzugewandten Wand oder der fahrzeugabgewandten Wand oder beider Wände in einem mittigen Bereich mit einer Versteifung versehen, da der mittige Bereich aufgrund der Öffnung in der fahrbahnzugewandten Wand von dieser keine große Versteifung erfährt und beispielsweise im Fall eines zusätzlichen montierten Anhängeelements den größten Kräften ausgesetzt ist, die auf die Stützelemente und von diesen auf das Fahrzeugheck zu übertragen sind.

Um im Bereich der kastenförmigen Struktur Gewicht zu sparen, ist vorzugsweise vorgesehen, dass mindestens eine Wand derselben mit mindestens einem Ausschnitt versehen ist, um deren Gewicht zu reduzieren.

Derartige Ausschnitte in den Wänden der kastenförmigen Struktur können in einer oder in mehreren der Wände, vorzugsweise in jeder der Wände, vorgesehen sein.

Um zu vermeiden, dass durch die Ausschnitte die Torsions- und Biegefestigkeit der kastenförmigen Struktur signifikant leidet, ist vorzugsweise vorgesehen, dass der mindestens eine Ausschnitt in jeder Richtung seiner flächenhaften Erstreckung eine Ausdehnung aufweist, die maximal dem Doppelten, besser maximal dem Eineinhalbfachen und noch besser dem Einfachen, der Flächenausdehnung eines diesen umgebenden Flächenbereichs in der jeweiligen Richtung, beträgt.

Des Weiteren ist bei dem Vorsehen von Ausschnitten zweckmäßigerweise vorgesehen, dass zwischen den Ausschnitten Wandbereiche liegen, deren Ausdehnung in jeder Richtung ihrer flächenhaften Erstreckung mindestens das 0,5-fache der Ausdehnung der Ausschnitte in der jeweiligen Richtung beträgt.

Durch derartige ausreichend breite Wandbereiche oder Querstege lässt sich die Torsions- und Biegefestigkeit der kastenförmigen Struktur sicherstellen.

Insbesondere ist hierzu erforderlich, dass in allen Wänden, in welchen die vorstehend genannten Ausschnitte liegen, auch die vorstehend genannten Flächenbereiche zwischen den Ausschnitten vorliegen.

Besonders vorteilhaft ist es dabei, wenn die in der Querrichtung zwischen den Ausschnitten liegenden Flächenbereiche zumindest bereichsweise parallel und/oder quer zu der zur vertikalen Längsmittelebene verlaufen und somit insbesondere im Bereich der jeweiligen Wand zur Zug- und Schubsteifigkeit der jeweiligen Wand beitragen.

Ferner ist vorzugsweise vorgesehen, dass der mindestens eine Ausschnitt eine Außenkontur mit einer im Wesentlichen runden und/oder ovalen Grundform aufweist.

Eine derartige Grundform der Ausnehmung erlaubt es, sich in Randbereichen der Ausschnitte aufbauende Spannungen zu vermeiden.

Alternativ dazu ist aber auch möglich, dass die Ausschnitte eine Außenkontur mit einer Dreiecksform als Grundform, insbesondere mit gerundeten Eckbereichen, aufweisen, wobei derartige in Dreiecksform ausgebildete Ausschnitte den Vorteil haben, dass die zwischen diesen liegenden Flächenbereiche so angeordnet werden können, dass sie sich insbesondere schräg zur vertikalen Längsmittelebene, das heißt sowohl quer als auch parallel zur vertikalen Längsmittelebene erstecken und somit ebenfalls die Zug- und Schubsteifigkeit der einzelnen Wände verbessern.

Dabei dienen insbesondere auch die gerundeten Eckbereiche dazu, Spannungsspitzen in den Eckbereichen zu vermeiden.

Im Rahmen der bislang beschriebenen Ausführungsbeispiele dienen die Ausschnitte insbesondere dazu, Gewicht einzusparen, wobei dies dann relevant ist, wenn die Wände der kastenförmigen Struktur eine relativ große Dicke des Blechmaterials, beispielsweise 4 mm oder mehr bei einer Zugfestigkeit von 400 MPascal oder weniger, aufweisen. In diesem Fall lässt sich mit unwesentlichen Einbußen hinsichtlich der Torsions- und Biegefestigkeit durch die Ausschnitte Gewicht sparen.

Eine andere vorteilhafte Lösung sieht vor, dass der mindestens eine Ausschnitt, bezogen auf den diesen umgebenden Flächenbereich relativ zu diesem Flächenbereich einen hochgestellten Randbereich aufweist.

Ein derartiges Hochstellen von Randbereichen bei einem Ausschnitt ermöglicht es, die Torsions- und Biegesteifigkeit der kastenförmigen Struktur und somit auch der einzelnen Wände signifikant zu verbessern, so dass dadurch die Möglichkeit besteht, die Materialdicke der Wände gegebenenfalls zu reduzieren, beispielsweise auf weniger als 5 mm noch besser 4 mm und weniger.

In diesem Fall kann beispielsweise die Zugfestigkeit des Blechmaterials zwischen 400 MPascal und 800 MPascal liegen
Insbesondere ist hierbei vorgesehen, dass der Randbereich geschlossen um den jeweiligen Ausschnitt umläuft und somit die Stabilisierungswirkung eines geschlossenen, um den jeweiligen Ausschnitt umlaufenden Ringkörpers aufweist.

Besonders vorteilhaft ist es, wenn die hochgestellten Randbereiche quer zu den diese umgebenden Flächenbereichen eine Höhe aufweisen, die mindestens dem zweifachen einer Materialdicke des umgebenden Flächenbereichs entspricht, so dass der insbesondere geschlossen umlaufende Flächenbereich eine erhöhte Torsions- und Verwindungsfestigkeit der jeweiligen Wand bewirken.

Um außerdem die Stabilität der Wand zu erhöhen ist vorzugsweise vorgesehen, dass mindestens ein Teil der Wand durch Umformen, insbesondere Umformen ausgehend von einem Flachmaterial, eine erhöhte Steifigkeit gegen Deformationen aufweist.

Ein derartiges Umformen kann im einfachsten Fall darin bestehen, die jeweilige Wand mit Wölbungen oder Umbiegungen zu versehen, die sich in unterschiedlichste Richtungen erstrecken können.

Besonders vorteilhaft ist es, wenn mindestens eine der Wände der kastenförmigen Struktur eine quer zu einer zur vertikalen Längsmittelebene verlaufende Wölbung aufweist.

Eine derartige Wölbung kann beispielsweise eine Wölbung oder eine Umbiegung mit einer Biegelinie, beispielsweise parallel zur vertikalen Längsmittelebene oder in einer Querrichtung zu dieser sein.

Eine weitere vorteilhafte Lösung vor, dass mindestens zwei Wände durch eine Umformung als einstückiges Teil ausgebildet sind.

Beispielsweise kann in diesem Fall die Biegelinie der Umformung sich in der Querrichtung zur vertikalen Längsmittelebene erstrecken.

Es ist aber auch denkbar, die Biegelinie der Umformung noch abschnittsweise durch eine quer zu dieser Biegelinie verlaufende Umformung noch zusätzlich zu stabilisieren.

Ein vorteilhaftes Ausführungsbeispiel sieht dabei vor, dass mindestens eine der Wände und die sich an diese anschließende Wand Teile eines Profilkörpers, beispielsweise eines Winkel- oder U-Profils sind.

Eine besonders vorteilhafte Lösung sieht vor, dass mindestens eine der Wände mindestens eine eingeprägte Sicke aufweist.

Eine derartige eingeprägte Sicke kann je nach Orientierung eine Stabilität in den verschiedensten Richtungen ergeben.

So sieht eine vorteilhafte Lösung vor, dass mindestens eine der Wände, insbesondere die fahrzeugzugewandte und/oder die fahrzeugabgewandte Wand, mindestens eine eingeprägte Sicke aufweisen, die sich in der Querrichtung zur vertikalen Längsmittelebene erstreckt, um Zug- und Druckkräfte in Richtung des Fahrzeughecks oder vom Fahrzeugheck weg optimal auf die Stützelemente übertragen zu können.

Eine andere vorteilhafte Lösung sieht vor, dass ergänzend oder alternativ mindestens eine der Wände in der Querrichtung der kastenförmigen Struktur aufeinanderfolgend angeordnete eingeprägte Sicken aufweist, die insbesondere die Torsions- und Durchbiegesteifigkeit der kastenförmigen Struktur verbessern.

Derartige Sicken verlaufen vorzugsweise geneigt zu der vertikalen Längsmittelebene.

Dabei können alle Sicken in gleicher oder wechselnder Richtung geneigt verlaufen.

Alternativ dazu sieht eine vorteilhafte Lösung vor, dass in der Querrichtung zur vertikalen Längsmittelebene aufeinanderfolgende Sicken quer zueinander verlaufen und somit insbesondere die Sicken in der Querrichtung ähnlich einer Zickzacklinie angeordnet sind.

Ein derartiger Verlauf der Sicken erlaubt es, die Durchbiegesteifigkeit der Wände zu verbessern.

Das Vorsehen von Sicken erlaubt es insbesondere, hochfestes Blechmaterial, beispielsweise mit einer Zugfestigkeit von 800 MPascal oder mehr, mit einer Dicke von 3 mm oder weniger zu verwenden, und damit das Gewicht der Fahrzeuganbindungseinheit zu reduzieren.

Hinsichtlich der Verbindung der Wände selbst wurden bislang keine näheren Angaben gemacht.

So sieht eine vorteilhafte Lösung vor, dass im Bereich einer Verbindung zweier der Wände mindestens eines der Wandelemente mit einem Stegbereich über das andere der Wandelemente übersteht.

Eine derartige Lösung hat den Vorteil, dass der Stegbereich zu einer weiteren vorteilhaften Versteifung des jeweiligen, den Stegbereich bildenden Wandelements beiträgt, da dessen Erstreckung in der Richtung, mit welcher der Stegbereich über das andere Wandelement übersteht, die Ausdehnung des Wandelements vergrößert.

Noch vorteilhafter ist es, wenn der Stegbereich noch eine Umbiegung aufweist und somit die Umbiegung, insbesondere wenn sie quer zur Erstreckung des Stegbereichs verläuft, noch eine zusätzliche Versteifung quer zur Ausdehnung des Stegbereichs ermöglicht.

Hinsichtlich der Verbindung zweier aneinander anstoßender Wandelemente wurden bislang keine näheren Angaben gemacht.

Prinzipiell kann die Verbindung der Wandelemente mit einer konventionellen Schweißnaht erfolgen.

Um die Materialeigenschaften möglichst wenig zu beeinflussen, ist vorzugsweise vorgesehen, dass zur Verbindung zweier aneinander anstoßender Wände eine Laserschweißnaht vorgesehen ist.

Die Laserschweißnaht kann dabei eine durchgehende oder eine unterbrochene Schweißnaht sein.

Ferner sieht eine weitere vorteilhafte Lösung vor, dass bei der Verbindung zweier aneinander angrenzender Wände diese eine Steckverbindung bilden.

Eine derartige Steckverbindung heißt, dass Bereiche der Wände ineinandergreifen.

Insbesondere ist zur Ausbildung der Steckverbindung vorgesehen, dass eine der Wände eine Ausnehmung aufweist, in welche das andere der Wandelemente mit einem an diesen angepassten Vorsprung eingreift.

Darüber hinaus ist vorzugsweise vorgesehen, dass die Wände zumindest im Bereich der Steckverbindung miteinander verschweißt sind, so dass damit eine dauerhafte stabile und insbesondere bruchsichere Verbindung der Wandelemente auch bei wechselnder Krafteinwirkung auf die kastenförmige Struktur gegeben ist.

Hinsichtlich des Verlaufs der die kastenförmige Struktur bildenden Wände wurden ebenfalls keine näheren Angaben gemacht.

So sieht eine vorteilhafte Lösung vor, dass mindestens eine der Wände einen von einem Verlauf in einer Ebene abweichenden Verlauf aufweist, so dass der Aufprallkörper einen variierenden Querschnitt aufweist.

Insbesondere ist dabei vorgesehen, dass die fahrzeugabgewandte Wand in Richtung von der fahrzeugzugewandten Wand weg gewölbt ist, so dass dadurch die kastenförmige Struktur zumindest hinsichtlich des Abstandes zwischen der fahrzeugzugewandten Wand und der fahrzeugabgewandten Wand einen variierenden Querschnitt aufweist.

Hinsichtlich der weiteren Ausbildung der Zentraleinheit wurden bislang keine näheren Angaben gemacht.

So kann erfindungsgemäß die Zentraleinheit lediglich dazu dienen, die Stützelemente miteinander zu verbinden und eine ausreichende Basis für die Stoßenergieabsorptionselemente und die Seitenaufprallelemente zu schaffen.

Erfindungsgemäß ist die Zentraleinheit derart ausgebildet, dass an dieser ein Anhängeelemente für einen Anhänger oder einen Lastenträger montierbar ist und dass die durch das Anhängeelement auf die Zentraleinheit übertragenen Kräfte von der Zentraleinheit auf die Stützelemente und von diesen auf die Seitenbereiche der Fahrzeugkarosserie übertragen werden.

Insbesondere ist dabei die Einheit aus Zentraleinheit und den Stützelementen mit einer derartigen Stabilität auszubilden, dass die von dem Anhängeelement wirkenden Kräfte sicher auf die Seitenbereiche der Fahrzeugkarosserie übertragen werden, unabhängig davon, wie das Crashverhalten des Querträgers ausgebildet wird.

Besonders günstig ist es dann, wenn die kastenförmig ausgebildete Struktur der Zentraleinheit eine Aufnahmeeinheit für das Anhängeelement trägt, das heißt diese Aufnahmeeinheit für das Anhängeelement an der kastenförmigen Struktur montierbar ist.

Erfindungsgemäß ist hierbei vorgesehen, dass die Aufnahmeeinheit für das Anhängeelement in der Zentraleinheit, das heißt insbesondere in der kastenförmigen Struktur, angeordnet ist.

Insbesondere im Fall der Ausbildung der kastenförmigen Struktur als geschlossene kastenförmige Struktur ist es vorteilhaft, wenn die Aufnahmeeinheit für das Anhängeelement in einem Innenraum der Zentraleinheit, das heißt insbesondere in einem Innenraum der kastenförmigen Struktur, angeordnet ist.

Besonders vorteilhaft ist die vorstehend genannte Lösung dann, wenn eine fahrbahnzugewandte Wand der Zentraleinheit eine Öffnung aufweist, durch welche das Anhängeelement mit der Aufnahmeeinheit einsetzbar ist.

Das heißt, dass die Öffnung in der fahrbahnzugewandten Wand groß genug sein muss, um die Aufnahmeeinheit mitsamt dem montierten Anhängeelement in den Innenraum der Zentraleinheit, das heißt insbesondere der kastenförmigen Struktur derselben, einzusetzen.

Diese Lösung hat den großen Vorteil, dass der erfindungsgemäße aufprallabsorbierende Querträger an Fahrzeugen eingesetzt werden kann, die ohne ein Anhängeelement ausgeliefert werden, und das nachträglich in derartigen Fahrzeugen in den aufprallabsorbierenden Querträger gemäß der Erfindung das Aufnahmeelement einsetzbar ist, um auch das Anhängeelement damit an dem aufprallabsorbierenden Querträger zu fixieren.

Hierbei ist vorzugsweise vorgesehen, dass das Anhängeelement in seiner Arbeitsstellung die Öffnung in der fahrbahnzugewandten Wand durchgreift und somit unter der Querträgereinheit entgegengesetzt zur Fahrtrichtung hindurchgreift, so dass sich das Anhängeelement entgegen zur Fahrtrichtung bis zu seinem Ankuppelelement erstrecken kann.

Dabei kann das Anhängeelement so ausgebildet sein, dass es von der Aufnahmeeinheit lösbar ist und somit in einer nicht genutzten Stellung oder Ruhestellung separat aufbewahrt wird.

Eine andere vorteilhafte Lösung sieht vor, dass das Anhängeelement in einer Ruhestellung im Wesentlichen in dem Innenraum der kastenförmigen Struktur der Zentraleinheit angeordnet ist.

Vorzugsweise lässt sich diese Lösung ebenfalls beispielsweise zur Aufnahme eines abnehmbaren Anhängeelements ausbilden.

Besonders vorteilhaft ist es jedoch in diesem Fall, wenn das Anhängeelement zwischen der Arbeitsstellung und der Ruhestellung um mindestens eine Schwenkachse verschwenkbar ist, so dass die Aufnahmeeinheit eine Schwenklagereinheit für das Anhängeelement umfasst, mit welcher dieses dann um die Schwenkachse schwenkbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer an einem Heckbereich der Fahrzeugkarosserie angeordneten Stoßfängereinheit und einem von der Stoßfängereinheit abgedeckten aufprallabsorbierenden Querträger, der in diesem Fall Teil einer Anhängekupplung ist, so dass an dem aufprallabsorbierenden Querträger ein Anhängeelement gehalten ist.
- Fig. 2: eine ausschnittsweise Darstellung des Heckbereichs der Kraftfahrzeugkarosserie mit einem an dem Heckbereich montierten aufprallabsorbierenden Querträger, welcher sich über Seitenbereiche des Heckbereichs abstützt;
- Fig. 3: eine perspektivische Darstellung einer Einheit aus der Zentraleinheit und den von dieser gehaltenen Stützelementen, allerdings ohne Seitenaufprallelemente und Stoßenergieabsorptionselemente als Bestandteil eines ersten Ausführungsbeispiels.
- Fig. 4: eine Draufsicht von hinten auf die Einheit aus Zentraleinheit und Stützelementen gemäß Fig. 3, ebenfalls ohne Stoßenergieabsorptionselemente und Seitenaufprallelemente;
- Fig. 5: einen Schnitt längs Linie 5-5 in Fig. 4;
- Fig. 6: einen Schnitt längs Linie 6-6 in Fig. 4;
- Fig. 7: einen Schnitt längs Linie 7-7 in Fig. 4;
- Fig. 8: eine perspektivische Darstellung des aufprallabsorbierenden Querträgers umfassend die Zentraleinheit und die Stützelemente sowie die Stoßenergieabsorptionselemente und die Seitenaufprallelemente gemäß dem ersten Ausführungsbeispiel;
- Fig. 9: eine Draufsicht von hinten auf den aufprallabsorbierenden Querträger gemäß dem ersten Ausführungsbeispiel;
- Fig. 10: eine perspektivische Darstellung einer linksseitig des aufprallabsorbierenden Querträgers angeordneten Einheit aus Stoßenergieabsorptionselement und Seitenaufprallelement;
- Fig. 11: eine perspektivische Darstellung einer rechtsseitig an dem aufprallabsorbierenden Querträger angeordneten Einheit aus Stoßenergieabsorptionselement und Seitenaufprallelement;
- Fig. 12: einen Schnitt längs Linie 12-12 in Fig. 9;
- FIG 13: einen Schnitt ähnlich Fig. 6 durch das erste Ausführungsbeispiel im rechten Bereich des Querträgers und der gelenkigen Verbindung des Seitenaufprallelements mit der Zentraleinheit;
- Fig. 14: eine ausschnittsweise Darstellung einer fahrzeugabgewandten Wand der Zentraleinheit mit an dieser bewegbar abgestützten Seitenaufprallelementen;
- Fig. 15: einen Schnitt ähnlich Fig. 13 einer Variante der gelenkigen Verbindung eines Seitenaufprallelements mit der Zentraleinheit;

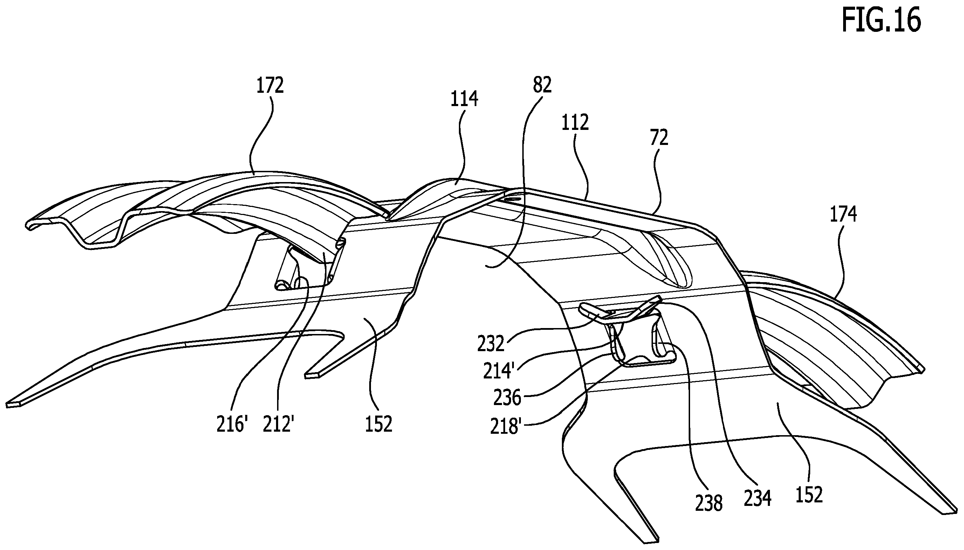

- Fig. 16: eine Darstellung ähnlich Fig. 14 der Variante der gelenkigen Verbindung zwischen der Zentraleinheit und den Seitenaufprallelementen;
- Fig. 17: eine schematische exemplarische Darstellung eines Seitenaufpralls auf der rechten Seite des aufprallabsorbierenden Querträgers;
- Fig. 18: eine Darstellung einer Einheit aus Anhängeelement und Aufnahmeeinheit, in diesem Fall ausgebildet als Schwenklagereinheit, mit einem durchgezogen gezeichneten Anhängeelement in Arbeitsstellung und gestrichelt angedeutetem Anhängeelement in Ruhestellung;
- Fig. 19: einen Schnitt ähnlich Fig. 6 durch die erfindungsgemäße Zentraleinheit mit in einem Innenraum derselben montierter Aufnahmeeinheit mitsamt Anhängeelement;
- Fig. 20: eine perspektivische Darstellung des Crashabsorbierenden Querträgers mit montierter Aufnahmeeinheit und einem Anhängeelement in Arbeitsstellung;
- Fig. 21: eine Darstellung ähnlich Fig. 19 mit einem Anhängeelement in Ruhestellung;
- Fig. 22: eine perspektivische Darstellung ähnlich Fig. 20 mit dem Anhängeelement in Ruhestellung;
- Fig. 23: eine Darstellung ähnlich Fig. 19 mit einer Variante einer Aufnahmeeinheit zur Aufnahme eines lösbar montierbaren Anhängeelements;
- Fig. 24: eine perspektivische Darstellung ähnlich Fig. 20 mit dem lösbar montierbaren Anhängeelement in Arbeitsstellung;
- Fig. 25: eine perspektivische Darstellung der Einheit aus der Zentraleinheit und den von diesen gehaltenen Stützelementen gemäß Fig. 3 mit Blick von unten in Richtung des Kraftfahrzeugs als Bestandteil eines zweiten Ausführungsbeispiels;
- Fig. 26: eine perspektivische Darstellung der Einheit gemäß Fig. 25 des zweiten Ausführungsbeispiels mit Blick von oben vom Kraftfahrzeug weg;
- Fig. 27: eine perspektivische Darstellung der Einheit ähnlich Fig. 25 eines dritten Ausführungsbeispiels;
- Fig. 28: eine perspektivische Darstellung der Einheit ähnlich Fig. 26 des dritten Ausführungsbeispiels;
- Fig. 29: einen Schnitt längs Linie 29-29 in Fig. 27 und
- Fig. 30: eine Darstellung ähnlich Fig. 3 eines vierten Ausführungsbeispiels.

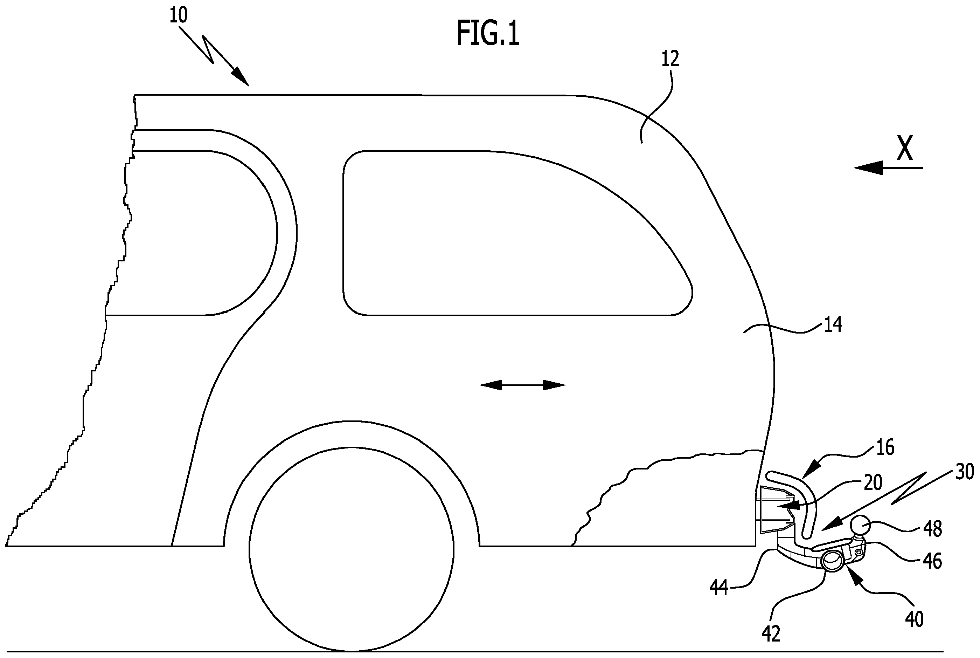

Die Erfindung dient zur Anwendung an einem Kraftfahrzeug 10, welches eine Fahrzeugkarosserie 12 aufweist, die an einem Fahrzeugheck 14 eine als Ganzes mit 16 bezeichnete Stoßfängereinheit trägt, wie in Fig. 1 dargestellt.

Verdeckt durch die Stoßfängereinheit 16 ist an dem Fahrzeugheck 14 ein als Ganzes mit 20 bezeichneter aufprallabsorbierender Querträger angeordnet, welcher Teil einer als Ganzes mit 30 bezeichneten Anhängekupplung sein kann oder zu einer als Ganzes mit 30 bezeichneten Anhängekupplung erweitert werden kann, wenn zusätzlich an den aufprallabsorbierenden Querträger 20 ein Anhängeelement 40, insbesondere ausgebildet als Kugelhals 42, vorgesehen ist, welches sich von einem ersten Ende 44, das mit dem aufprallabsorbierenden Querträger 20 verbunden ist, bis zu einem zweiten Ende 46 erstreckt, das ein Ankuppelelement 48, beispielsweise ausgebildet als Kupplungskugel, trägt.

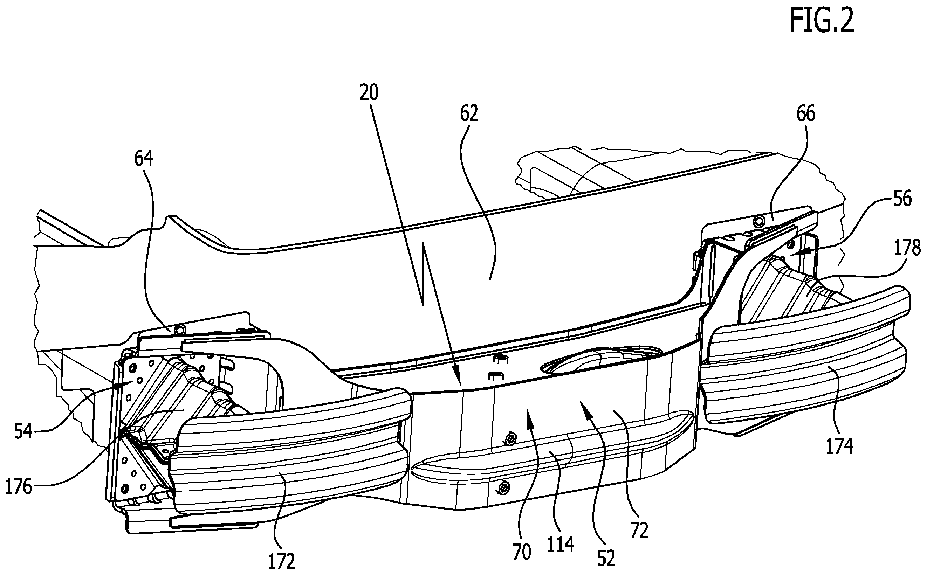

Der in Fig. 2 in Verbindung mit einem Ausschnitt des Fahrzeughecks 14 dargestellte aufprallabsorbierende Querträger 20 umfasst eine Zentraleinheit 52, welche in einer parallel zur Stoßfängereinheit 16 verlaufenden Querrichtung 58 mit Stützelementen 54, 56 versehen ist, welche fest mit der Zentraleinheit 52 verbunden sind.

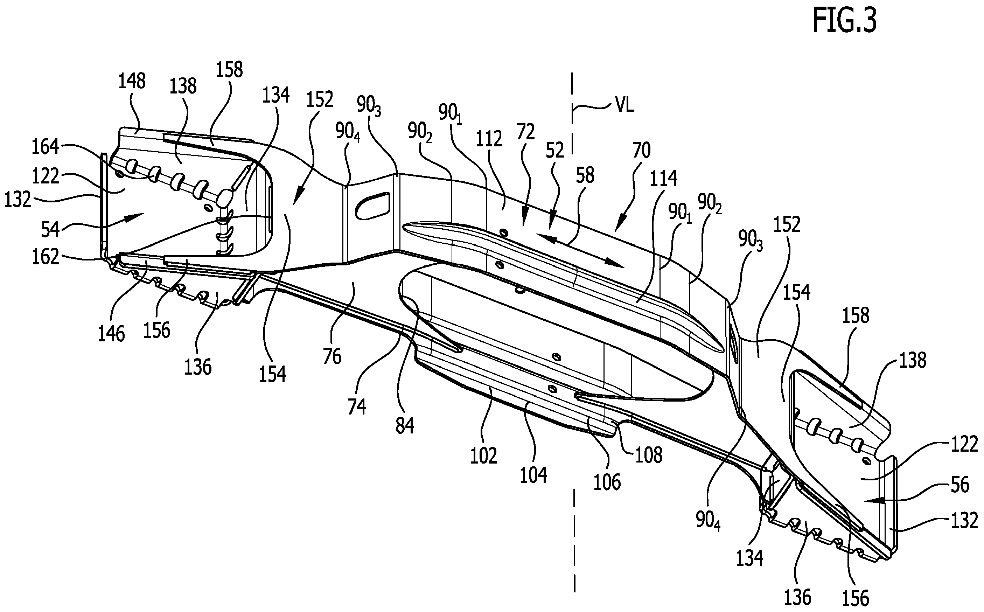

Die Stützelemente 54, 56, beispielsweise dargestellt in Fig. 2 und 3, stützen sich dabei auf Seitenbereichen 64, 66 des Heckbereichs 14 ab, die üblicherweise so ausgebildet sind, dass sie in einem Crashfall die auftretenden Kräfte aufnehmen und auf den Heckbereich 14 weiterleiten können, wohingegen ein zwischen den Stützbereichen 64, 66 liegender mittiger Abschnitt 62 des Heckbereichs 14 nicht für die Aufnahme von Kräften im Crashfall geeignet ist.

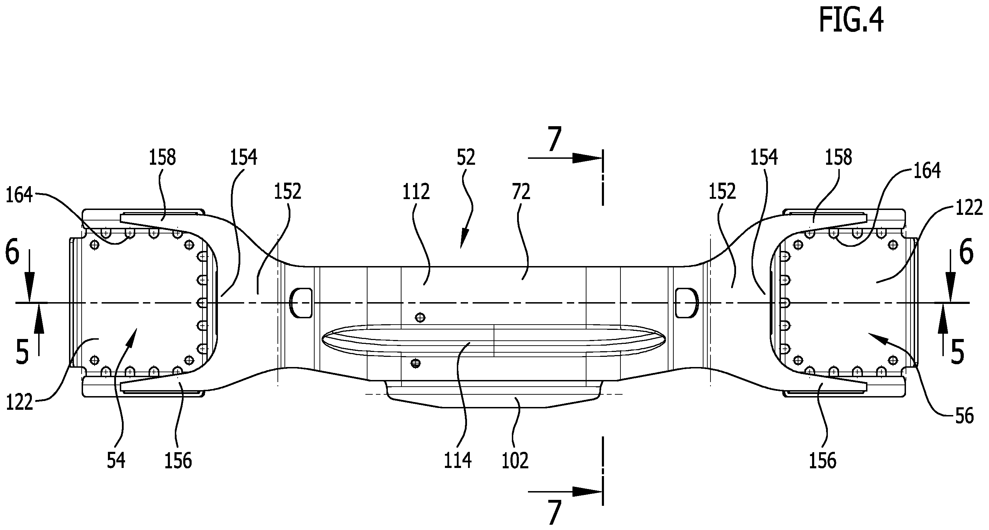

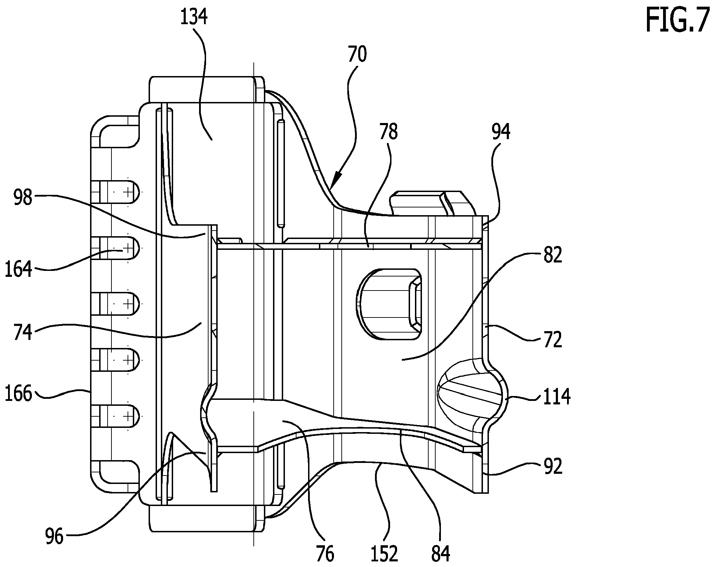

Wie in den Fig. 3 bis 7 dargestellt, umfasst die Zentraleinheit 52 eine kastenförmige Struktur 70, welches eine fahrzeugabgewandte Wand 72, eine fahrzeugzugewandte Wand 74, eine fahrbahnzugewandte Wand 76 und eine fahrbahnabgewandte Wand 78 aufweist, die, wie in Fig. 7 dargestellt, einen Innenraum 82 der Zentraleinheit 52 umschließen.

Der Innenraum 82 ist beispielsweise über eine fahrbahnseitige Öffnung 84 in der fahrbahnzugewandten Wand 76 von der Fahrbahn ausgehend zugänglich.

Außerdem ist vorzugsweise die fahrbahnabgewandte Wand 78 ebenfalls mit einer Öffnung 86 versehen, die allerdings einen kleineren Querschnitt als die Öffnung 84 aufweist und über einer dem Stützelement 56 zugewandten Seite des Innenraums 82 liegt.

Vorzugsweise ist zur Versteifung der fahrzeugabgewandten Wand 72 vorgesehen, dass diese beispielsweise symmetrisch zu einer vertikalen Längsmittelebene VL angeordnete und ungefähr parallel zu dieser vertikalen Längsmittelebene VL verlaufende Umbiegungen 90₁, 90₂, 90₃ und 90₄ aufweisen, wobei die Umbiegungen 90₁, 90₂, 90₃, 90₄ maximal in einem Winkel von 15° gegenüber der vertikalen Längsmittelebene VL verlaufen, vorzugsweise parallel ausgerichtet sind und auch parallel zueinander verlaufen und die Umbiegungen 90₁, 90₂, 90₃ und 90₄ im Abstand voneinander und in jeweils zunehmendem Abstand von der vertikalen Längsmittelebene VL verlaufen.

Dadurch wird nicht nur die Steifigkeit der fahrzeugabgewandten Wand 72, sondern der gesamten kastenförmigen Struktur 70 verbessert.

Vorzugsweise sind die fahrzeugabgewandte Wand 72, die fahrzeugzugewandte Wand 74, die fahrbahnzugewandte Wand 76 und die fahrbahnabgewandte Wand 78, wie in Fig. 7 dargestellt, miteinander verschweißt, wobei sich die fahrbahnabgewandte Wand 72 mit endseitigen Wandabschnitten 92, 94 über die fahrbahnzugewandte Wand 76 und die fahrbahnabgewandte Wand 78 hinaus erstreckt und sich die fahrzeugzugewandte Wand 74 ebenfalls mit ihren endseitigen Wandabschnitten 96, 98 ebenfalls über die fahrbahnzugewandte Wand 76 und die fahrbahnabgewandte Wand 78 hinauserstreckt.

Durch diese Wandabschnitte 92, 94, 96, 98 lässt sich die Steifigkeit der Zentraleinheit 52 noch zusätzlich verbessern.

Ferner ist zur Verbesserung der Steifigkeit der Zentraleinheit 52 aufgrund der Größe der Öffnung 84 in der fahrbahnzugewandten Wand 76 die fahrzeugzugewandte Wand 74 noch mit einem zusätzlichen versteifenden Wandabschnitt 102 versehen, der sich im Bereich der Öffnung 84 noch zusätzlich in Richtung der Fahrbahn über die fahrbahnzugewandte Wand 76 hinaus erstreckt und vorzugsweise, wie in Fig. 3 dargestellt, noch parallel zur fahrbahnzugewandten Wand 76 verlaufende Umbiegungen 104, 106 und 108 aufweist, die ebenfalls die Steifigkeit der fahrzeugzugewandten Wand 74 im Bereich der Öffnung 84 in der fahrbahnzugewandten Wand 76 verbessern (Fig. 3).

Darüber hinaus ist, wie in Fig. 7 dargestellt, die fahrzeugabgewandte Wand 72 im Wesentlichen über einen Mittelabschnitt 112 der fahrzeugabgewandten Wand 72 mit einer Sicke 114 versehen, welche ebenfalls die Steifigkeit des Mittelabschnitts 112, vorzugsweise ebenfalls im Bereich der Öffnung 84 verbessert.

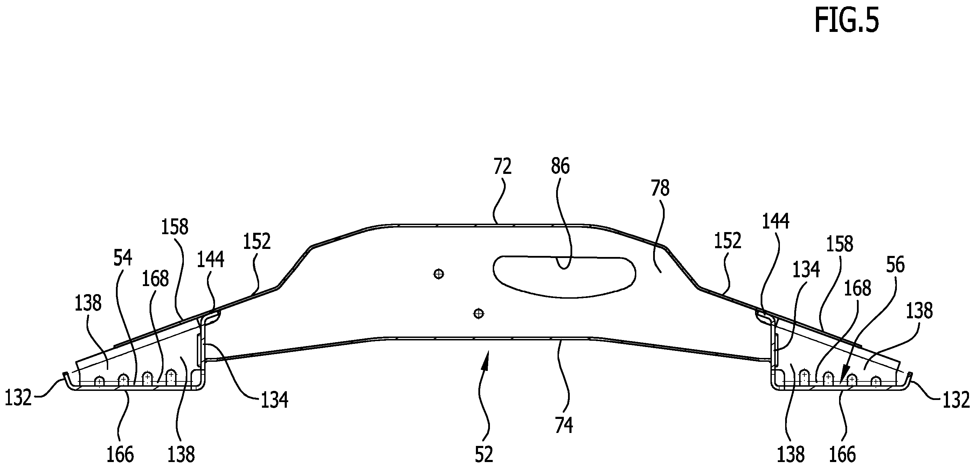

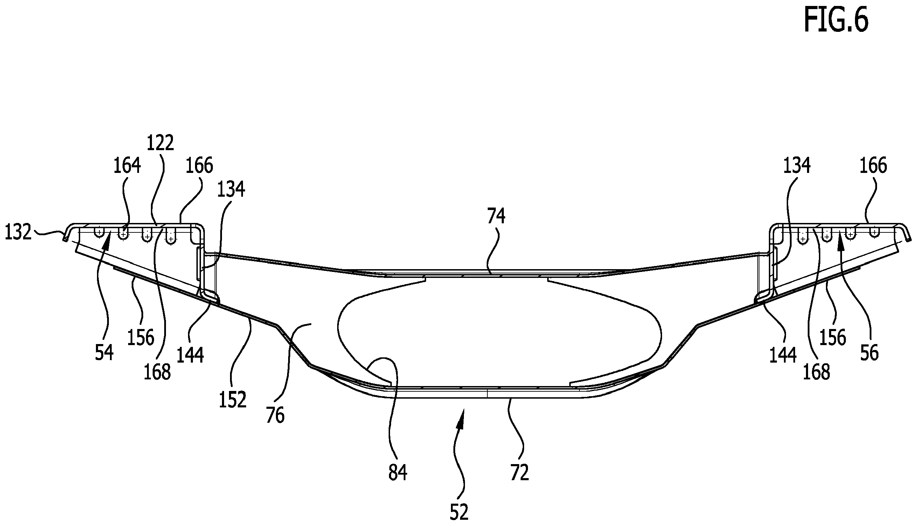

Wie in Fig. 5 und 6 dargestellt, umfasst jedes der Stützelemente 54, 56 eine Fußplatte 122, welche umfangsseitig mit die Fußplatte 122 umgebenden und einstückig an die Fußplatte 122 durch Umbiegung angeformten und sich quer zu dieser von den Seitenbereichen 64, 66 weg erstreckenden als Wandabschnitte ausgebildeten Stegen versehen ist, wobei ein der Zentraleinheit 52 abgewandter Wandabschnitt 132 die geringste Ausdehnung quer zur Fußplatte 122 aufweist, wohingegen ein der Zentraleinheit 52 zugewandter Wandabschnitt 134, der ebenfalls einstückig mit der Fußplatte 122 verbunden ist, die größte Ausdehnung ausgehend von der Fußplatte 122 in Richtung von den Seitenbereichen 64 und 66 weg aufweist, wobei dieser Wandabschnitte 134 einen endseitigen Abschluss der kastenförmigen Struktur 70 bildet.

Ferner sind noch ein fahrbahnzugewandter Wandabschnitte 136 und ein fahrbahnabgewandter Wandabschnitte 138 an die Fußplatte 122 angeformt, die sich ausgehend vom Wandbereich 132 in Richtung des Wandabschnitts 134 mit zunehmender Ausdehnung von der Fußplatte 122 weg erstrecken und an ihren an den Wandabschnitts 134 angrenzenden Seiten mit diesem verschweißt sind.

Ferner ist der der Zentraleinheit 52 zugewandte Wandbereich 134 auf seiner der Fußplatte 122 abgewandten Seite noch mit einer Umbiegung 144 versehen, welche fest mit einem Endbereich 154 des seitlichen Ausläufers 152 der fahrzeugabgewandten Wand 72 verschweißt ist und außerdem sind auch der fahrbahnzugewandte Wandabschnitt 136 und der fahrbahnabgewandte Wandabschnitt 138 ebenfalls noch mit Umbiegungen 146 und 148 versehen, die mit auf diesen aufliegenden gabelförmigen Fortsätzen 156 und 158 des Endbereichs 154 der seitlichen Ausläufer 152 der Zentraleinheit 52 verschweißt sind, so dass der seitliche Ausläufer 152 zwischen dem mit dem Endbereich 154 des seitlichen Ausläufers 152 und den Fortsätzen 156 und 158 des seitlichen Ausläufers 152 eine sich ausgehend von der Zentraleinheit 52 erstreckende Ausnehmung 162 wie eine Gabel umschließen, wobei die Ausdehnung der Ausnehmung 162 im Wesentlichen der Ausdehnung der Fußplatte 122 entspricht.

Zur zusätzlichen Versteifung zwischen der Fußplatte 122 mit den Wandabschnitten 134, 136 und 138 sind an der einen Übergang zwischen den diesen darstellenden Biegekante noch Ausprägungen 164 eingeformt, welche die Ausrichtung der Wandabschnitten 134, 136 und 138 relativ zur Fußplatte 122 noch zusätzlich versteifen.

Somit bildet jedes der Stützelemente 54 und 56 mit den sich von den Seitenbereichen 64 und 66 des Heckbereichs 14 wegerstreckenden Wandabschnitten 132, 134, 136, 138 eine in sich topfähnliche steife Struktur, die durch die Wandabschnitte 134, 136 und 138 einerseits mit der fahrzeugabgewandten Wand 72 aufgrund deren Ausläufer 152 fest verbunden sind und insbesondere seitens der dem Wandbereich 134, wie in Fig. 5 bis 7 dargestellt, sowohl mit der fahrzeugzugewandten Wand 74 als auch mit der fahrbahnzugewandten Wand 76 und der fahrbahnabgewandten Wand 78 durch Verschweißen fest verbunden sind.

Insgesamt bildet die Zentraleinheit 52 mit den Stützelementen 54 und 56 eine in sich steife und stabile Struktur, die jeweils mit einer Karosserieabstützfläche 166 der jeweiligen Fußplatte 122 an jeweils einem der Seitenbereiche 64, 66 des Heckbereichs 14 anliegt und außerdem der Karosserieabstützfläche 166 gegenüberliegend eine Abstützfläche 168 aufweist, die zur Aufnahme der Kräfte im Fall eines Seitenaufpralls dient.

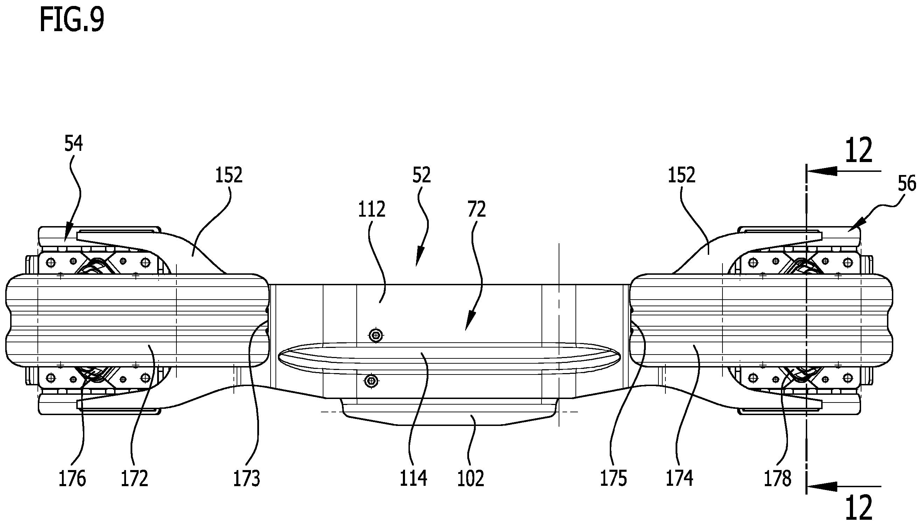

Hierzu umfasst der Querträger 20, wie in Fig. 2 sowie Fig. 8 bis 13 dargestellt, beiderseits der Zentraleinheit 52 jeweils den Stützelementen 54 und 56 gegenüberliegend angeordnete Seitenaufprallelemente 172 und 174, die mittels Stoßenergieabsorptionselementen 176 und 178 sich an den Stützelementen 54 und 56 abstützen.

Jedes der Seitenaufprallelemente 172 und 174 erstreckt sich vorzugsweise in der Querrichtung 58 über mindestens ein Viertel und weniger als ein Drittel der Gesamtausdehnung des Querträgers 20 in der Querrichtung 58.

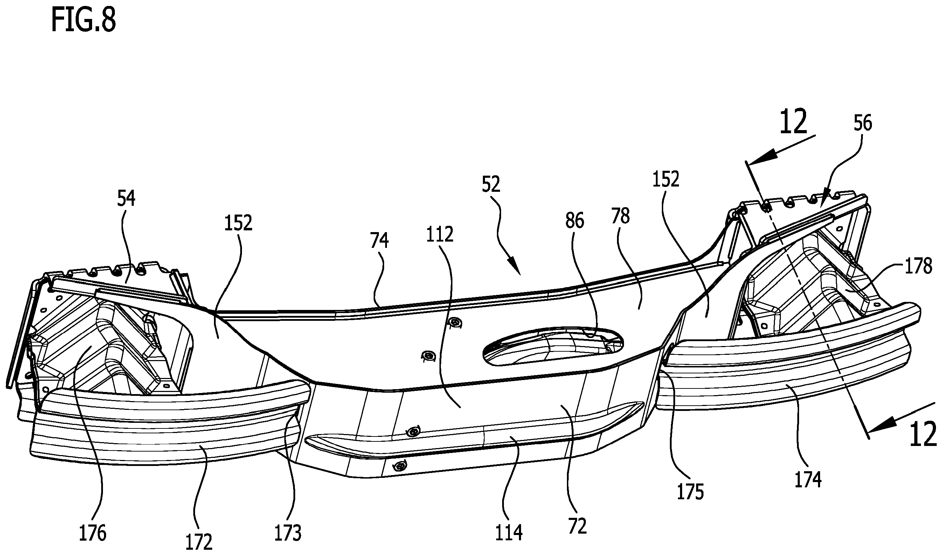

Die Seitenaufprallelemente 172 und 174 erstrecken sich dabei, wie beispielsweise in Fig. 8 dargestellt, ungefähr in der Querrichtung 58 seitlich in Fortsetzung des Mittelabschnitts 112 der fahrzeugabgewandten Wand 72 in ungefähr demselben Abstand von dem Fahrzeugheck 14 wie der Mittelabschnitt 112 und übergreifen insbesondere die seitlich des Mittelabschnitts 112 liegenden Ausläufer 152 der fahrzeugabgewandten Wand 72, so dass zwischen diesen und den Seitenaufprallelementen 172 und 174 in Fahrtrichtung ein ausreichend großer Zwischenraum im Fall eines Aufpralls zur Verfügung steht, wie sich aus Fig. 8 ergibt.

Insbesondere sind die Seitenaufprallelemente 172 und 174 zur Erhöhung der Stabilität mit parallel zu ihrer Ausdehnung in der Querrichtung 58 verlaufenden Sicken 170 versehen.

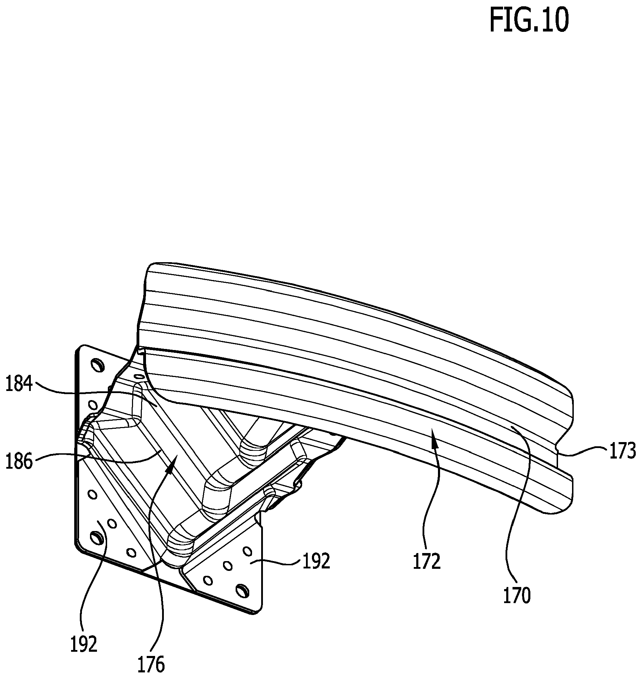

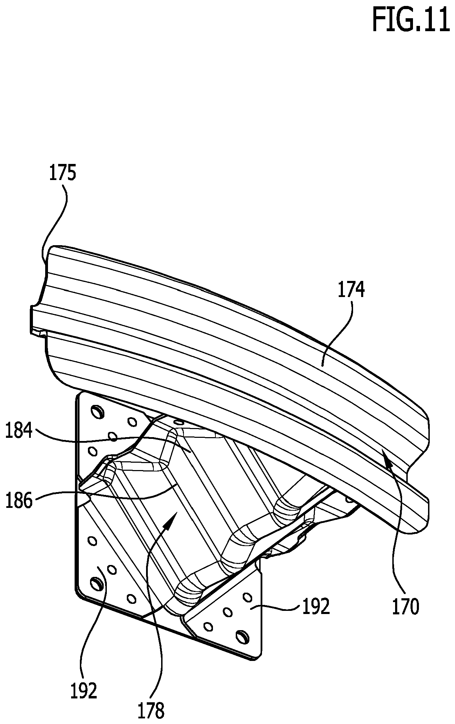

Die in Fig. 10 und 11 dargestellten Stoßenergieabsorptionselemente 176 und 178 sind beispielsweise als eine Mittelachse 182 umgebende Hohlkörper 180 ausgebildet, deren Wandelemente 184 quer zur Mittelachse 182 bereits vorgeformte Falten 186 aufweisen, wobei die Falten 186 der Wandelemente 184 die sich ausbildenden Umformungen der Stoßenergieabsorptionselemente 176 und 178 bei einem Aufprall auf das jeweilige Seitenaufprallelement 172, 174 vordefinieren.

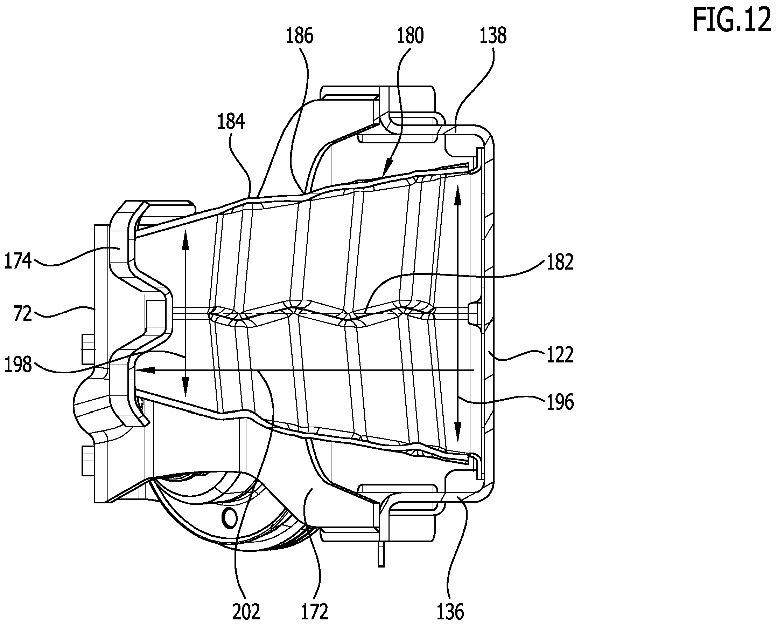

Ferner weisen die Stoßenergieabsorptionselemente 176 und 178 jeweils auf der entsprechenden Fußplatte 122 aufliegende Stützflansche 192 auf, die auf der jeweiligen Abstützfläche 168 flächenhaft aufliegen, wobei die Stoßenergieabsorptionselemente 176 und 178 im Bereich der Abstützfläche 168 eine Querschnittsausdehnung 196 aufweisen, die größer ist als eine Querschnittsausdehnung 198 im Bereich der Seitenaufprallelemente 174 und 176 (Fig. 12).

Die unterschiedlichen Querschnittsausdehnungen 196 und 198 tragen dazu bei, dass die Stoßenergieabsorptionselemente 176 und 178 sich im Crashfall näherungsweise parallel zu ihrer Mittelachse 182 unter Verkürzung ihrer Ausdehnung in ihrer Erstreckungsrichtung 202 zwischen der Fußplatte 122 und dem jeweiligen Seitenaufprallelement 172, 174 deformieren und somit die maximale Crashenergie absorbieren können.

Die Seitenaufprallelemente 172 und 174 sind, wie in Fig. 7, 8, 11, 13 und 14 nicht nur über die Stoßenergieabsorptionselemente 176 und 178 an den Stützelementen 54 und 56 des Querträgers 20 abgestützt, sondern auch noch an der Zentraleinheit 52, nämlich über sich ausgehend von dem Mittelabschnitt 112 zugewandten Endbereichen 173, 175 der Seitenaufprallelemente 172, 174 in Richtung des Mittelabschnitts 112 erstreckende Fortsätze 212, 214, die in für diese vorgesehene Aufnahmen 216 und 218 eingreifen, welche in der fahrzeugabgewandten Wand 72 vorgesehen sind, und insbesondere in einem Übergangsbereich 222, der jeweils zwischen dem Mittelabschnitt 112 und den Ausläufern 152 der fahrzeugabgewandten Wand 72 angeordnet ist und sich schräg von dem Mittelabschnitt 112 in Richtung der Ausläufer 152 verläuft.

Somit liegt zumindest in einer Voraufprallstellung der Seitenaufprallelemente 172, 174 eine gelenkige Verbindung 217, 219 derselben mit der Zentraleinheit 52 vor.

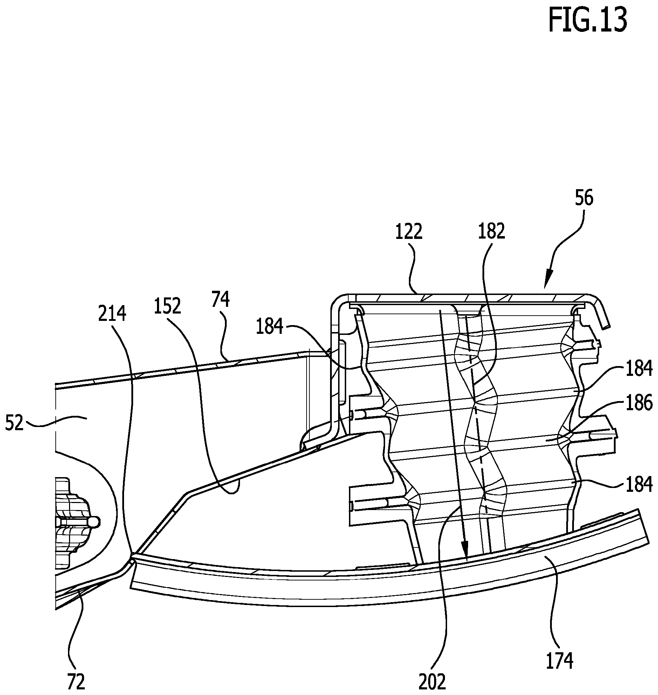

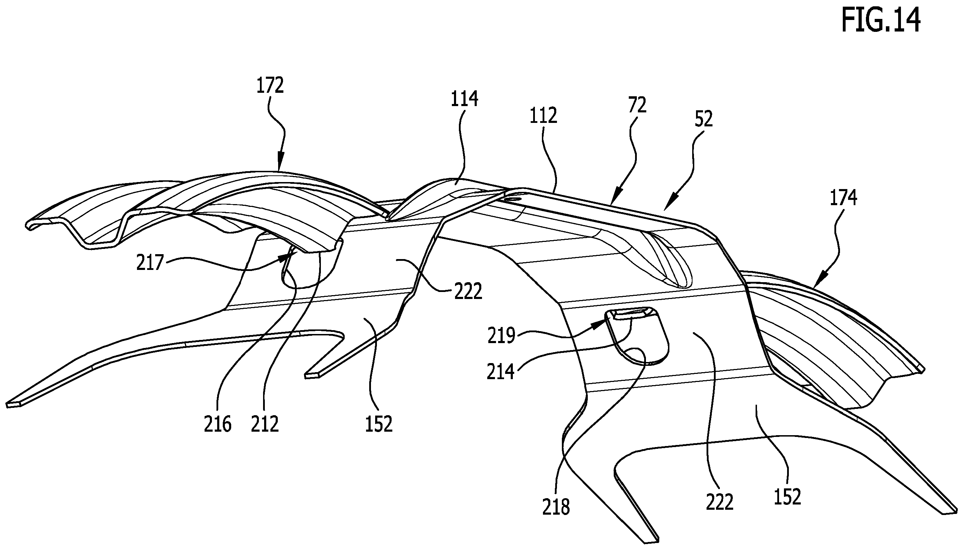

Durch die Fortsätze 212 und 214 erfolgt somit im Crashfall, das heißt bei Beaufschlagung von einem der Seitenaufprallelemente 172 und 174, eine zusätzliche Abstützung und Führung derselben relativ zur Zentraleinheit 52, um eine möglichst gleichmäßige Deformation des jeweiligen Stoßenergieabsorptionselements 176 und 178 und somit eine optimale Absorption der Aufprallenergie zu erreichen (Fig. 13 und Fig. 14).

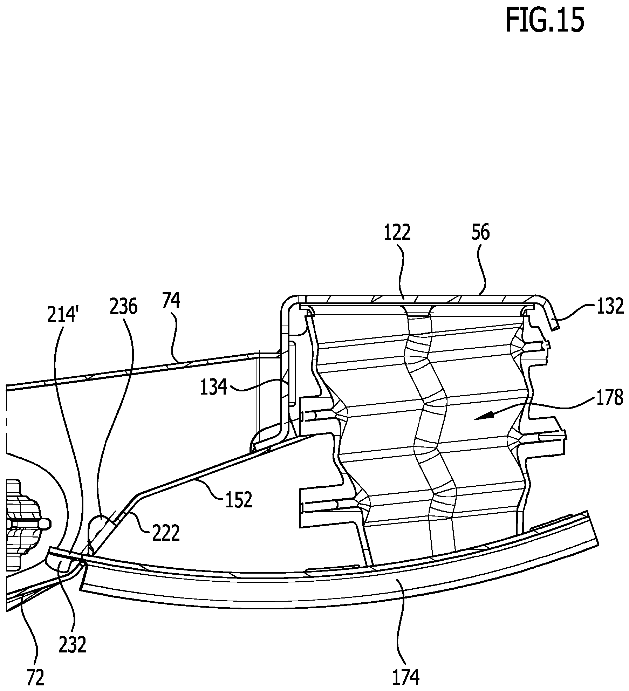

Bei einer in Fig. 15 dargestellten Variante der vorstehend beschriebenen Lösung sind die Fortsätze 212' und 214' mit seitlich sich derselben erstreckenden Vorsprüngen 232 und 234 versehen, die ein Herausgleiten der Fortsätze 212' und 214' aus den Aufnahmen 216' und 218' verhindern, wobei die Aufnahmen 216' und 218' noch zusätzlich mit in den Innenraum 82 der Zentraleinheit 52 hineinragenden Führungswangen 236, 238 versehen sind, die dafür sorgen, dass die Fortsätze 212' und 214' mit den seitlichen Vorsprüngen 232, 234 in definierter Position relativ zu den Aufnahmen 216', 218' gehalten sind.

Diese Lösung erlaubt somit eine präzisere schwenkbare Führung der Seitenaufprallelemente 172 und 174 relativ zu der Zentraleinheit 52.

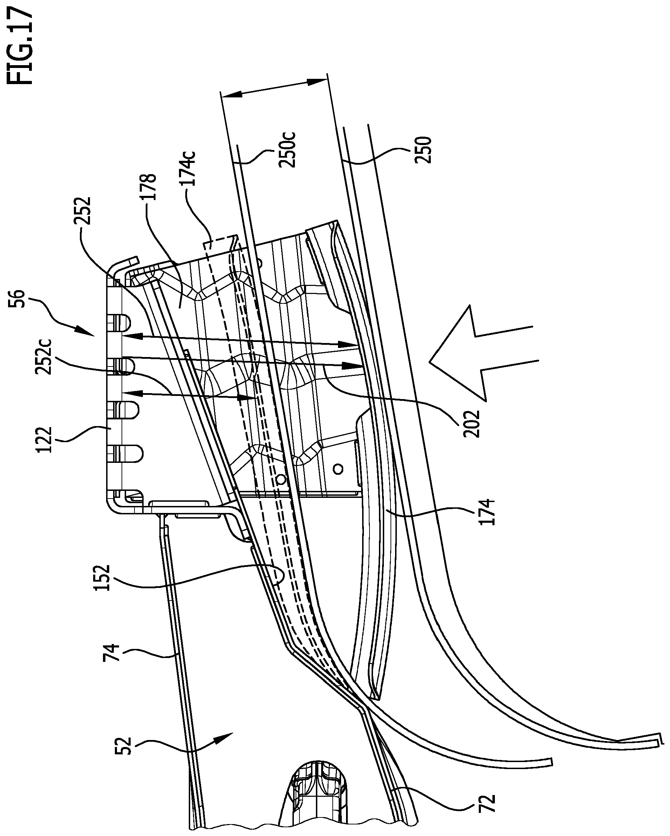

Wie in Fig. 17 dargestellt, führt die erfindungsgemäße Konstruktion der Seitenaufprallelemente 172 und 174 sowie der Stoßenergieabsorptionselemente 176 und 178, wie exemplarisch am Beispiel des Seitenaufprallelements 174 und des Stoßenergieabsorptionselements 178 dargestellt, dazu, dass ein auf das in einer Voraufprallstellung stehende Seitenaufprallelement 174 aufprallender Stoßfänger 250 eines kollidierenden Fahrzeugs das Seitenaufprallelement 174 zum einen deformiert und zumindest zunächst noch geführt durch den Fortsatz 214 und die Aufnahme 218 mit einer Schwenkbewegung um diese in Richtung des Stützelements 56 bewegt und dabei gleichzeitig das Stoßenergieabsorptionselement 178 so deformiert, dass dessen Erstreckung 252 in der Erstreckungsrichtung 202 in der Voraufprallstellung auf eine Erstreckungsrichtung 252c reduziert wird, die näherungsweise die Hälfte der Erstreckung 252 beträgt.

Somit ist immer noch eine ausreichend große Erstreckung 252c des deformierten Stoßenergieabsorptionselements 178 ausgehend von der Fußplatte 122 gegeben, so dass das Stoßenergieabsorptionselement 178 ausgehend von seiner ursprünglichen Erstreckung 252 in der Erstreckungsrichtung 202 so deformiert und unter Aktivierung der Faltung desselben so reduziert wird, dass bei der Deformation bis zu der verkürzten Erstreckung 252c in der Erstreckungsrichtung 202 eine definierte und somit die Energieabsorption definierbar gestaltende Deformation erfolgt, die in der Lage ist, die erforderliche Aufprallenergie bei einer RCAR-Crashanforderung aufzunehmen und auf den jeweiligen Seitenbereich 66 des Heckbereichs 16 zu übertragen.

Ferner ist vorzugsweise der Ausläufer 152 der fahrzeugabgewandten Wand 72 der Zentraleinheit 52 relativ zu den Stützelementen 54 und 56, in Fig. 17 dem Stützelement 56, so angeordnet, dass auch das deformierte Seitenaufprallelement 174c zu keiner Deformation im Bereich des Ausläufers 152 der fahrzeugabgewandten Wand 72 der Zentraleinheit 52 führt.

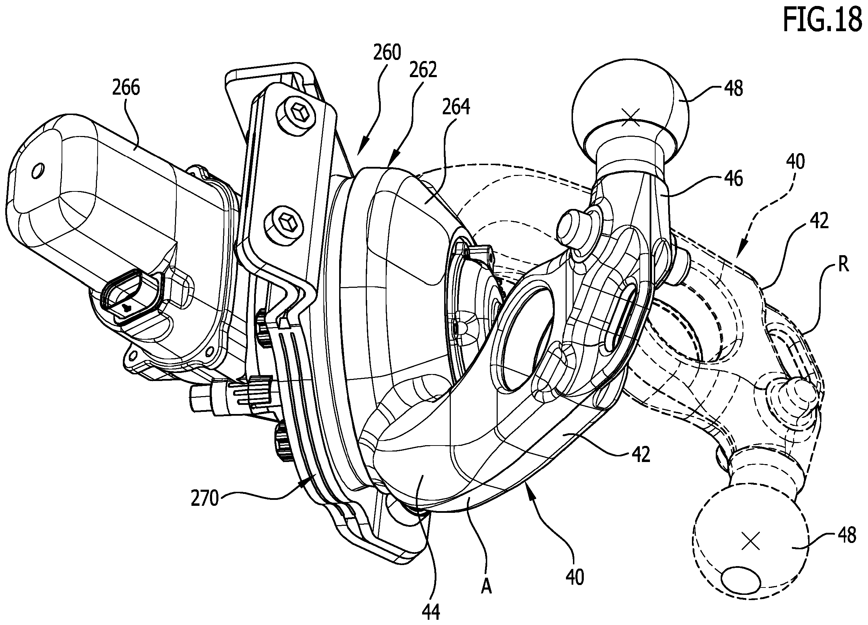

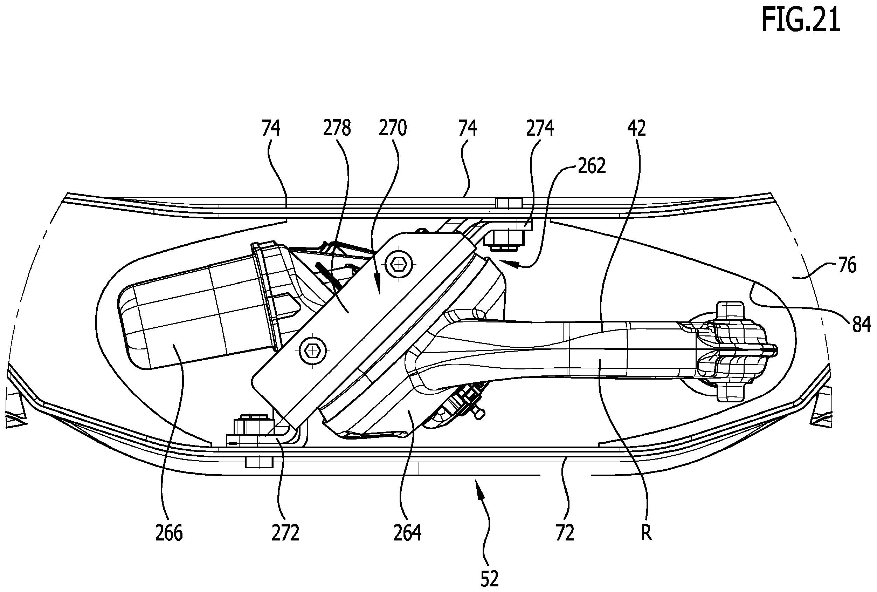

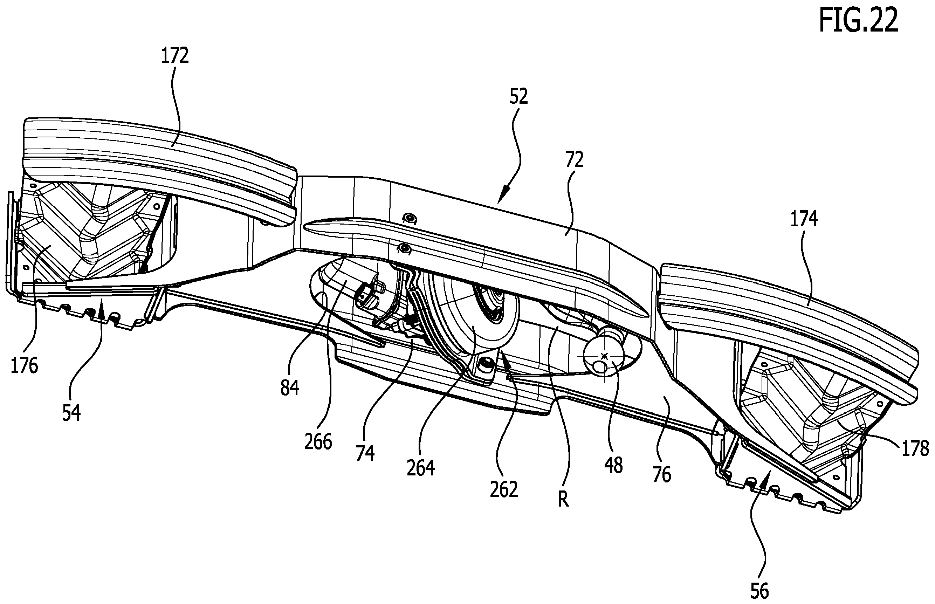

Um den aufprallabsorbierenden Querträger 20 zu einer Anhängekupplung 30 zu erweitern, welche das Anhängeelement 40 umfasst, ist, wie in Fig. 18 dargestellt, das Anhängeelement 40 mit einer als Ganzes mit 260 bezeichneten Aufnahmeeinheit für das Anhängeelement 40 versehen, welche bei dem in Fig. 18 dargestellten Ausführungsbeispiel einerseits eine Schwenklagereinheit 262 umfasst, welche einen Schwenklagerkörper 264 aufweist, mit welchem das Anhängeelement 40 mit dem ersten Ende 44 verbunden ist, so dass durch Drehung des Schwenklagerkörpers 264 um beispielsweise eine schräg zu einer Längsmittelebene L des Kraftfahrzeugs verlaufenden Schwenkachse S das Anhängeelement 40 von einer in Fig. 18, 19 und 20 dargestellten Arbeitsstellung A, die in Fig. 18 durchgezogen gezeichnet ist, in eine in Fig. 18, 21 und 22 gestrichelt angedeutete und in Fig. 21 und 22 dargestellte Ruhestellung R verschwenkbar ist, in welcher beispielsweise der Kugelhals 42 sich ausgehend von dem Schwenklagerkörper 264 so erstreckt, dass das Ankuppelelement 48 in Schwerkraftrichtung unterhalb des Kugelhalses 42 liegt.

Die Schwenklagereinheit 262 ist dabei beispielsweise noch durch einen Antriebsmotor 266 antreibbar.

Zur Montage der Schwenklagereinheit 262 in dem Innenraum 82 der kastenförmigen Struktur 70 ist diese an einer als Ganzes mit 270 bezeichneten Montagebasis gehalten, wobei die Schwenklagereinheit 262 die Montagebasis 270, beispielsweise ausgebildet als Flanscheinheit, durchsetzt und wobei beispielsweise auf einer Seite der Montagebasis 270 der Antriebsmotor 266 angeordnet ist und auf der gegenüberliegenden Seite der Schwenklagerkörper 264 liegt.

Insbesondere ist bei der erfindungsgemäßen Lösung die gesamte Aufnahmeeinheit 260 mitsamt dem montierten Anhängeelement 40 und der Montagebasis 270 durch die in Fig. 2, 20 und 22 dargestellte Öffnung 84 in der fahrbahnzugewandten Wand 76 in den Innenraum 82 der kastenförmig ausgebildeten Struktur 70 der Zentraleinheit 52 einsetzbar, wobei die Montagebasis 270 einen Montageflansch 272 zur Verbindung mit der fahrzeugabgewandten Wand 72 aufweist, einen Montageflansch 274 zur Verbindung mit der fahrzeugzugewandten Wand 74 der Zentraleinheit 52 und einen Montageflansch 278 zur Verbindung mit der fahrbahnabgewandten Wand 78 der Zentraleinheit 52 aufweist, so dass über die Montagebasis 270 eine stabile Verbindung zwischen der Schwenklagereinheit 262 und der Zentraleinheit herstellbar ist.

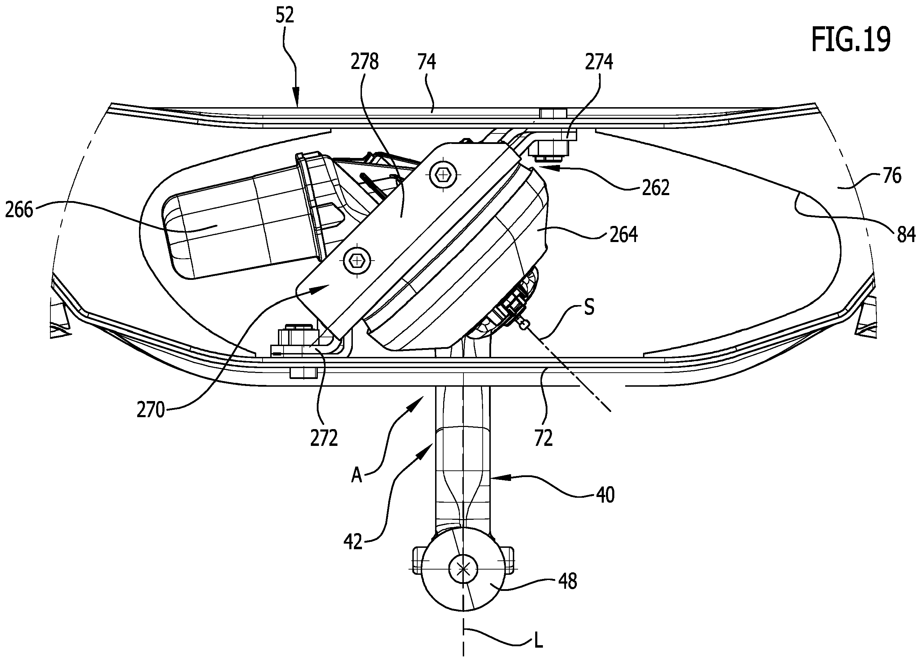

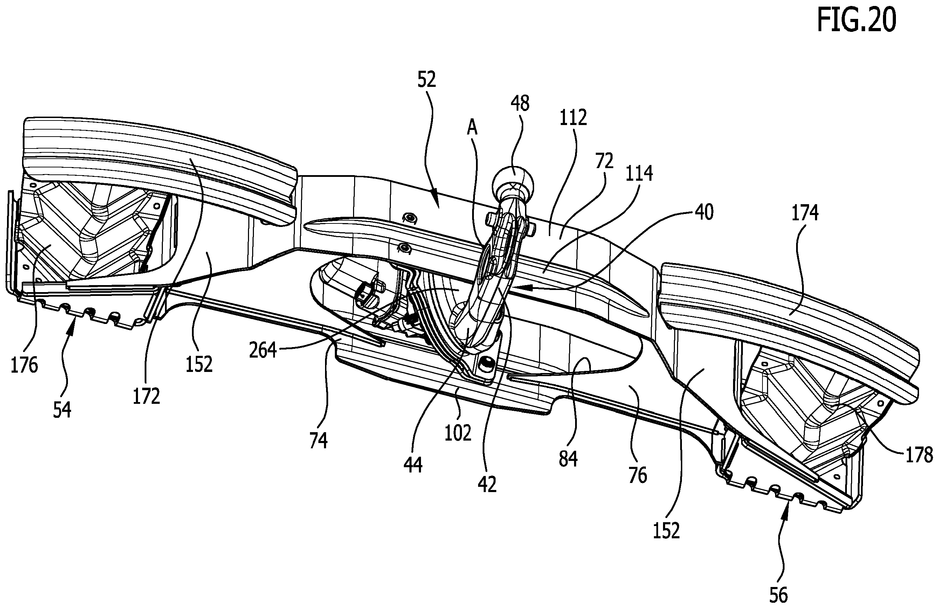

Die Einbaulage der Montagebasis 270 in die Zentraleinheit 52 ist dabei so gewählt, dass, wie in Fig. 19 und Fig. 20 dargestellt, das Anhängeelement 40 dann, wenn es in der Arbeitsstellung A steht, sich ausgehend von dem Schwenklagerkörper 264 mit dem ersten Ende 44 nach unten durch die Öffnung 84 in der fahrbahnzugewandten Wand der Kugelhals 42 hindurch erstreckt, sich unter der fahrzeugabgewandten Wand 72 entgegengesetzt zur Fahrtrichtung erstreckt, so dass das Ankuppelelement 48 in der Arbeitsstellung entgegengesetzt zur Fahrtrichtung hinter der fahrzeugabgewandten Wand 72 liegt, wie in Fig. 19 und 20 dargestellt.

Erfolgt jedoch ein Verschwenken des Anhängeelements 40 von der Arbeitsstellung A in die Ruhestellung R, so bewegt sich der Kugelhals 42 mitsamt dem Ankuppelelement 48 unter der fahrzeugabgewandten Wand 72 hindurch und von unten durch die Öffnung 84 in den Innenraum 82 der Zentraleinheit 52 hinein, wobei sich in diesem Fall der Kugelhals 42 ausgehend von dem Schwenklagerkörper 264 zwischen der fahrzeugabgewandten Wand 72 und der fahrzeugzugewandten Wand 74 erstreckt und nahe an der fahrbahnabgewandten Wand 78 liegt.

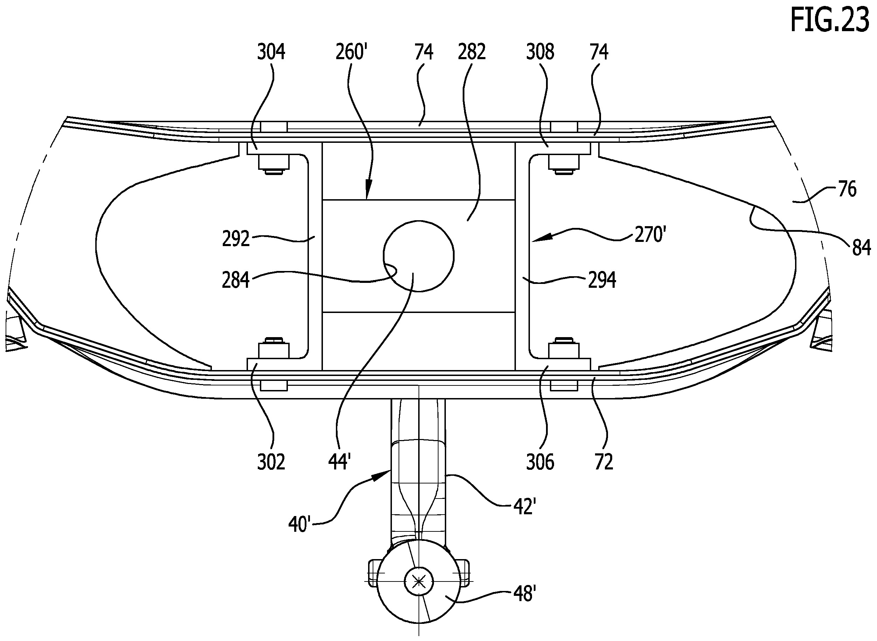

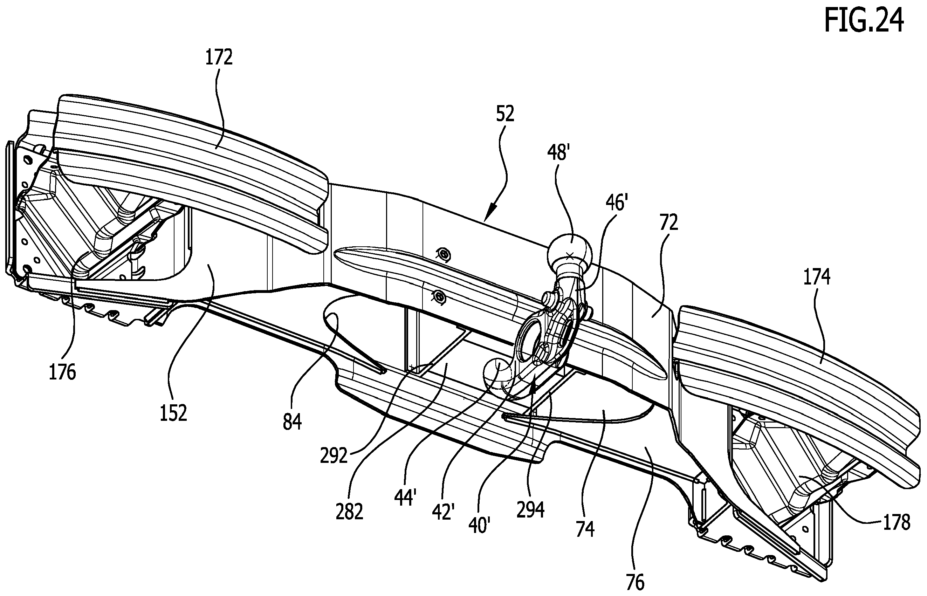

Alternativ zur Aufnahmeeinheit 260 für ein verschwenkbares Anhängeelement 40 sieht ein weiteres Ausführungsbeispiel, dargestellt in Fig. 23 und 24 eine Aufnahmeeinheit 260' vor, welche einen Lagerblock 282 aufweist, der mit einer Aufnahme 284 versehen ist, in welche ein erstes Ende 44' des Anhängeelements 40' einsteckbar und durch eine nicht dargestellte Verriegelungsvorrichtung verriegelbar ist, so dass das ganze Anhängeelement 40' mit dem ersten Ende 44', dem Kugelhals 42' und dem Ankuppelelement 48' aus dem Lagerblock 282 durch Entfernen des ersten Endes 44' nach unten entnehmbar ist und separat im Kraftfahrzeug lagerbar ist.

Der Lagerblock 282 ist dabei seinerseits noch durch eine Montagebasis 270' an der fahrzeugabgewandten Wand 72 und der fahrzeugzugewandten Wand 74 montierbar, beispielsweise dadurch, dass die Montagebasis 270' zwei den Lagerblock 282 zwischen sich aufnehmende Flanschplatten 292 und 294 aufweist, die fest mit dem Lagerblock 282 verbunden sind und die ihrerseits über Montageflansche 302, 304, 306 und 308 jeweils mit der fahrzeugabgewandten Wand 72 und der fahrzeugzugewandten Wand 74 verbunden sind, um die gesamte Aufnahmeeinheit 260' ebenfalls bei Bedarf in dem Innenraum 82 der Zentraleinheit 52 montieren zu können und somit den aufprallabsorbierenden Querträger 20 als Teil der Anhängekupplung 30 zu nutzen

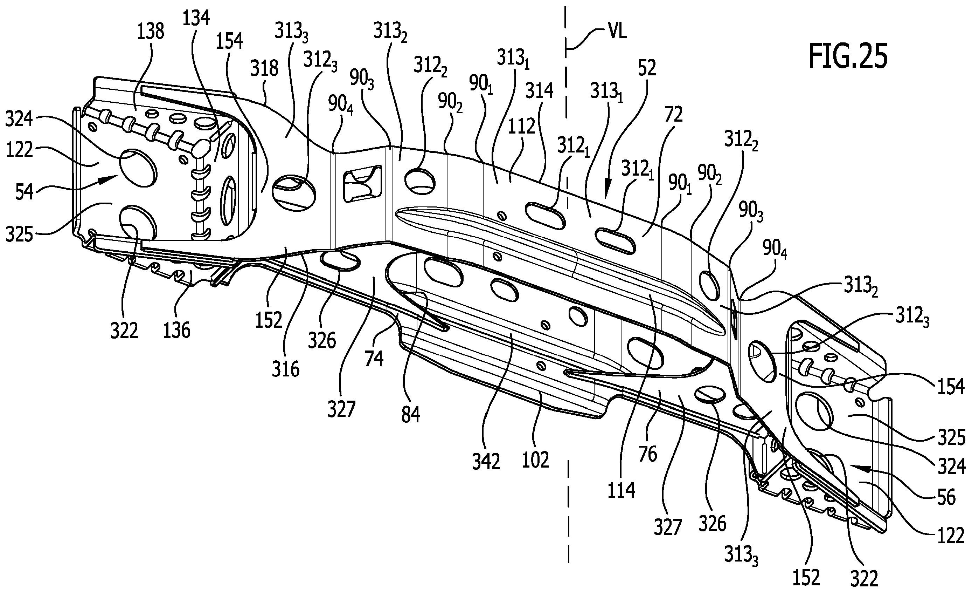

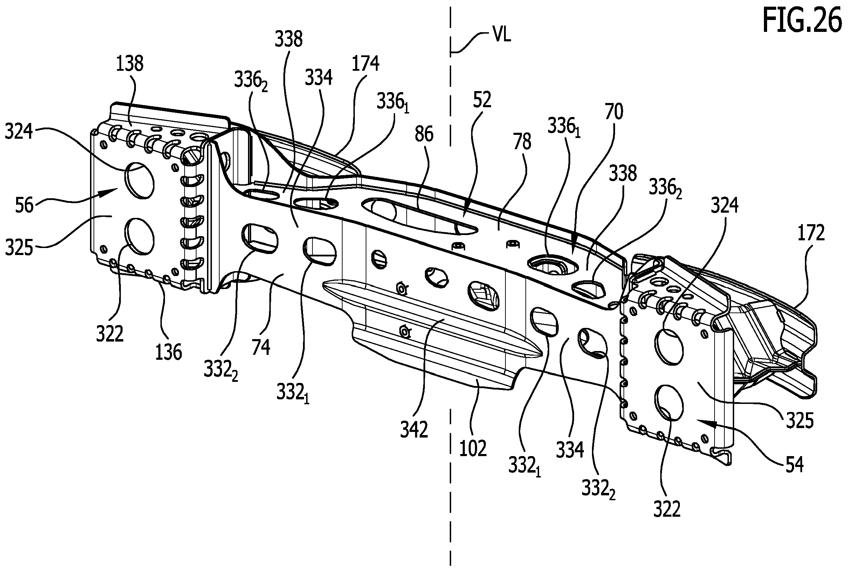

Bei einem zweiten Ausführungsbeispiel, bei welchem gemäß Fig. 25 und 26 lediglich die Zentraleinheit 52 und die von dieser gehaltenen Stützelemente 54 und 56 dargestellt sind, ist, um eine zusätzliche Gewichtsersparnis zu erreichen, die Zentraleinheit 52 im Bereich der fahrzeugabgewandten Wand 72 beiderseits der vertikalen Längsmittelebene VL, die insbesondere mit der vertikalen Längsmittelebene des Kraftfahrzeugs zusammenfällt, mit symmetrisch zu der vertikalen Längsmittelebene VL angeordneten Ausschnitten 312₁, 312₂, 312₃ versehen, die jeweils mit Abstand von der vertikalen Längsmittelebene VL angeordnet sind.

Dabei sind beispielsweise die Ausschnitte 312₁ von jeweils einem Flächenbereich 313₁ der fahrzeugabgewandten Wand 72 umgeben, der zwischen der vertikalen Längsmittelebene VL und den Umbiegungen 90₁liegt die Ausschnitte 312₂ liegen zwischen den Umbiegungen 90₂ und 90₃ umgeben von Flächenbereichen 313₂ und die Ausschnitte 312₃ liegen jeweils in den seitlichen Ausläufern 152 umgeben von Flächenbereichen 313₃.

Die Ausschnitte 312₁, 312₂, 312₃ sind so gewählt, dass deren Ausdehnung in allen Richtungen, insbesondere in Richtung parallel und quer zur vertikalen Längsmittelebene VL, maximal das Doppelte, des diese umgebenden jeweiligen Flächenbereichs 313₁, 313₂, 313₃ in der jeweiligen Richtung beträgt, innerhalb von welchem diese Ausschnitte 312 angeordnet sind, so dass ausreichend breite Materialstege um die jeweiligen Ausschnitte 312 herum bestehen, die dazu beitragen, dass die Ausschnitte 312 sich nicht negativ auf die Steifigkeit der Flächenbereiche 313 auswirken, die diese Ausschnitte 312 umgeben.

Derartige Flächenbereiche 313 erstrecken sich beispielsweise bei dem Mittelabschnitt 112 jeweils zwischen der Sicke 114 und einer fahrbahnabgewandten Oberkante 314 der fahrzeugabgewandten Wand 72 und zwischen der vertikalen Längsmittelebene VL und den Umbiegungen 90₁ oder den Umbiegungen 90₂ und 90₃ oder im Fall der seitlichen Ausläufer 152 zwischen der Umbiegung 90₄ und dem jeweiligen Endbereich 154 sowie der fahrbahnzugewandten Kante 316 und der fahrbahnabgewandten Kante 318 des Ausläufers 152.

In gleicher Weise sind die Fußplatten 122 der Stützelemente 54 und 56 ebenfalls noch mit Ausschnitten 322 und 324 versehen, deren jeweilige Gesamtausdehnung bezogen auf die Ausdehnung des diese umgebenden Flächenbereichs 325 der jeweiligen Fußplatte 122 ebenfalls maximal das Doppelte der Ausdehnung der diese umgebenden Flächenbereiche 325 in der jeweiligen Richtung beträgt, um deren Steifigkeit ebenfalls nicht zu reduzieren.

Zusätzlich sind auch in der fahrbahnzugewandten Wand 76 beiderseits der Öffnung 84 noch Ausschnitte 326 vorgesehen, deren Ausdehnung in der jeweiligen Richtung ebenfalls maximal das Doppelte der Ausdehnung des auf der jeweiligen Seite der Öffnung 84 liegenden und diese Ausschnitte umgebenden Flächenbereichs 327 in der jeweiligen Richtung der fahrbahnzugewandten Wand 76 beträgt.

Wie in Fig. 26 dargestellt, ist auch die fahrzeugzugewandte Wand 74 der kastenförmigen Struktur 70 mit symmetrisch zur vertikalen Längsmittelebene VL angeordneten Ausnehmungen 332₁ und 332₂ versehen, die von Flächenbereichen 334 der fahrzeugzugewandten Wand 74 umgeben sind, welche sich jeweils an die Stützelemente 54 und 56 anschließend bis zu der vertikalen Längsmittelebene VL erstrecken.

Auch in diesem Fall beträgt die Ausdehnung der Ausschnitte 332₁ und 332₂ in der jeweiligen Richtung maximal des Doppelte der diese umgebenden Flächenbereiche 334 in der jeweiligen Richtung.

Des Weiteren ist vorzugsweise auch die fahrbahnabgewandte Wand 78 mit beiderseits der vertikalen Längsmittelebene VL liegenden Ausschnitten 336₁ und 336₂ versehen, die ebenfalls innerhalb von sich an die Stützelemente 54 und 56 anschließenden Flächenbereichen 338 der fahrbahnabgewandten Wand 78 der kastenförmigen Struktur 70 liegen.

Auch in diesem Fall beträgt die Ausdehnung der Ausschnitte 336₁ und 336₂ in der jeweiligen Richtung maximal das Doppelte der Ausdehnung der diese umgebenden Flächenbereichs 338 in der jeweiligen Richtung.

Ergänzend können bei diesem Ausführungsbeispiel noch weitere Ausschnitte, beispielsweise im Bereich der Wandabschnitte 134 sowie 136 und 138 vorgesehen sein.

Zur zusätzlichen Stabilisierung der fahrzeugzugewandten Wand 74 ist diese im Abstand von dem Wandabschnitt 102 noch mit einer Sicke 342 versehen, die für zusätzliche Stabilität im an die Öffnung 84 angrenzenden Bereich der fahrzeugzugewandten Wand 74 dient.

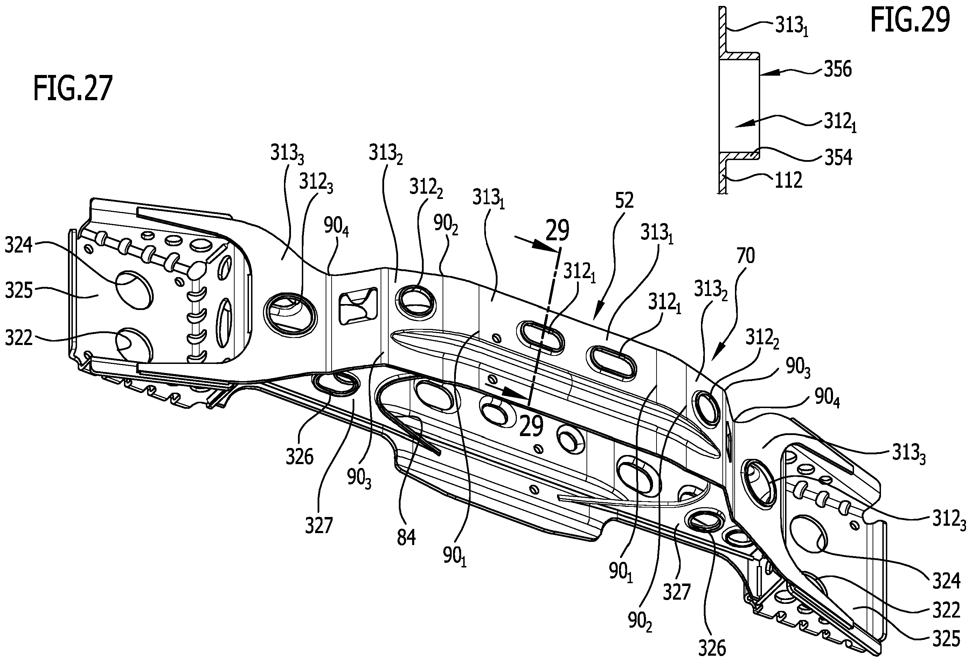

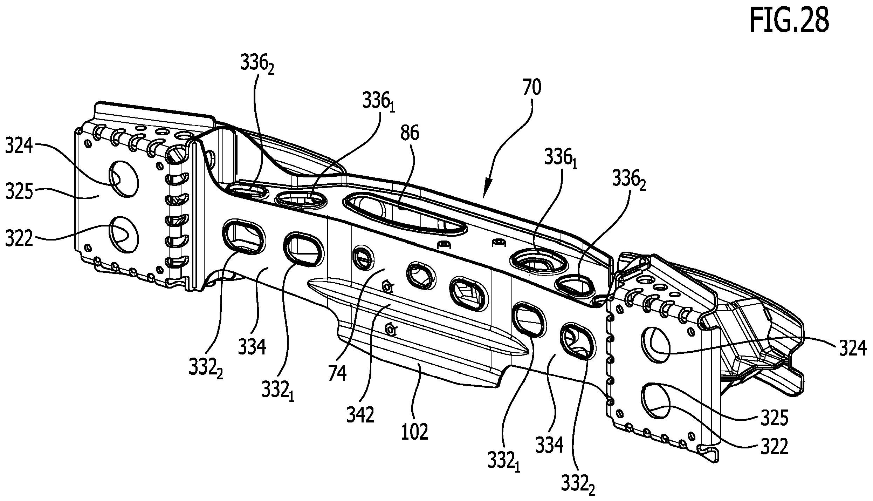

Bei einem dritten Ausführungsbeispiel, dargestellt in den Fig. 27 bis 29, sind im Bereich der Zentraleinheit 52, insbesondere der kastenförmigen Struktur 70, dieselben Ausschnitte 312, 326, 332 und 336 vorgesehen, wie beim zweiten Ausführungsbeispiel, allerdings sind alle diese Ausschnitte 312, 326, 332, 336, wie in Fig. 27 am Beispiel des Ausschnitts 312₁ dargestellt, so ausgebildet, dass diese ausgehend von dem jeweiligen Flächenbereich 313, 325, 327, 334, 338, in dem der entsprechende Ausschnitt, in dem Fall der Fig. 28 beispielsweise der Ausschnitt 312₁, angeordnet ist, quer zu dem jeweiligen Flächenbereich 313₁ verlaufende umgeformte Randbereiche 354 aufweisen, die geschlossen um den jeweiligen Ausschnitt 312₁ umlaufen (Fig. 29) und somit einen einstückig an den jeweiligen Ausschnitt 312₁ angeformten Ringkörper 356 bilden, der eine sich quer zum Flächenbereich 313₁ verlaufende Höhenausdehnung aufweist, die mindestens dem Doppelten der Dicke des Flächenbereichs 313₁, noch besser mindestens dem Dreifachen der Dicke des Flächenbereichs 313₁ entspricht, so dass der jeweilige Ringkörper 356 zu einer signifikanten Verbesserung der Torsionssteifigkeit des jeweiligen Flächenbereichs 313₁ der entsprechenden Wand, in diesem Fall der Wand 72 der kastenförmigen Struktur 70 beiträgt, die sich somit in allen Bereichen der kastenförmigen Struktur 70 auswirkt.

Beispielsweise besteht dadurch die Möglichkeit, die kastenförmige Struktur 70 aus einem Material mit geringerer Materialstärke, beispielsweise weniger als 4 mm, vorzugsweise ungefähr 3 mm und weniger auszubilden, wobei in diesem Fall beispielsweise die Zugfestigkeit des Materials im Bereich zwischen 500 und 800 MPa liegt.

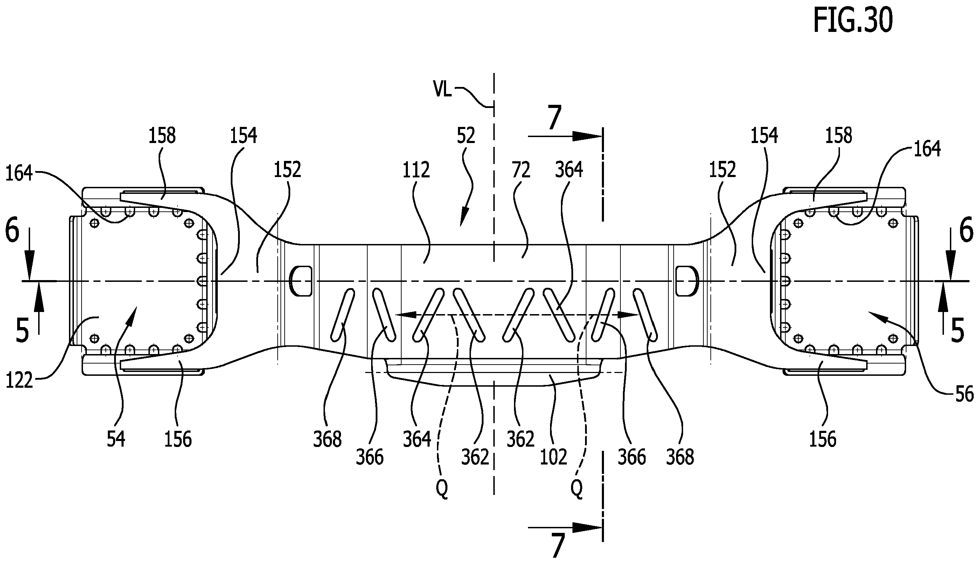

Bei einem vierten Ausführungsbeispiel gemäß Fig. 30 sind anstelle der Sicke 114 Sicken 362, 364, 366, 368 beiderseits der vertikalen Längsmittelebene VL in der fahrzeugabgewandten Wand 72 vorgesehen und in einer Querrichtung Q zur vertikalen Längsmittelebene VL aufeinanderfolgend angeordnet und ausgehend von der vertikalen Längsmittelebene mit wechselnder Neigung relativ zueinander verlaufen, insbesondere beiderseits der vertikalen Längsmittelebene entlang einer Zick-Zacklinie verlaufen, wobei die Zick-Zacklinien beiderseits der vertikalen Längsmittelebene VL symmetrisch verlaufen.

Derartige Sicken können auch in der fahrzeugzugewandten Wand 74 und/oder der fahrbahnzugewandten Wand 76 oder der fahrbahnabgewandten Wand 78 vorgesehen werden.

Generell erhöhen derartige Sicken 362, 364, 366, 368 die Durchbiegesteifigkeit der jeweiligen Wand 72, 74, 76, 78 und erlauben es, beispielsweise hochfestes Blechmaterial mit einer Dicke von 3 mm oder weniger einzusetzen.

Im Übrigen ist der Aufbau der Zentraleinheit 52 bei dem zweiten, dritten und vierten Ausführungsbeispiel identisch mit dem Aufbau des vorangehend beschriebenen ersten Ausführungsbeispiel, so dass ergänzend zu den voranstehenden Erläuterungen auf die Ausführungen zu dem ersten Ausführungsbeispiel vollinhaltlich Bezug genommen werden kann.

## Patentansprüche

1. Aufprallabsorbierender Querträger (20), der unter einer Stoßfängereinheit (16) einer Fahrzeugkarosserie (12) an einem Heckbereich (14) derselben montierbar ist, wobei der Querträger (20) sich in einer parallel zur Stoßfängereinheit (16) verlaufenden Querrichtung (58) erstreckt und endseitig angeordnete Stützelemente (54, 56) zur Abstützung an Seitenbereichen (64, 66) der Fahrzeugkarosserie (12) aufweist, und wobei die Stützelemente (54, 56) durch eine Zentraleinheit (52) des Querträgers (20) miteinander verbunden sind, wobei beiderseits der Zentraleinheit (52) relativ zu dieser bewegbar angeordnete Seitenaufprallelemente (172, 174) vorgesehen sind, die sich über Stoßenergieabsorptionselemente (176, 178) an den Stützelementen (54, 56) des Querträgers (20) abstützen, wobei die Zentraleinheit (52) eine kastenförmige Struktur (70) umfasst, wobei die kastenförmige Struktur (70) der Zentraleinheit (52) in Fahrtrichtung eine fahrzeugabgewandte Wand (72) aufweist und wobei die kastenförmige Struktur (70) der Zentraleinheit (52) eine fahrbahnabgewandte Wand (78) aufweist, **dadurch gekennzeichnet, dass** die kastenförmige Struktur (70) der Zentraleinheit (52) in Fahrtrichtung gesehen eine fahrzeugzugewandte Wand (74) aufweist, dass die Zentraleinheit (52) derart ausgebildet ist, dass an dieser ein Anhängeelement (40) für einen Anhänger oder einen Lastenträger montierbar ist, dass die durch das Anhängeelement (40) auf die Zentraleinheit (52) übertragenen Kräfte von der Zentraleinheit (52) auf die Stützelemente (54, 56) und von diesen auf die Seitenbereiche (64, 66) der Fahrzeugkarosserie (12) übertragen werden, dass die kastenförmig ausgebildete Struktur (70) der Zentraleinheit (52) eine Aufnahmeeinheit (260, 260') für das Anhängeelement (40) trägt, dass die Aufnahmeeinheit (260, 260') für das Anhängeelement (40) in der Zentraleinheit (52) angeordnet ist und dass insbesondere die Aufnahmeeinheit (260, 260') für das Anhängeelement (40) in einem Innenraum (82) der Zentraleinheit (52) angeordnet ist.

2. Querträger nach Anspruch 1, **dadurch gekennzeichnet, dass** die Stoßenergieabsorptionselemente (176, 178) sich in einer Erstreckungsrichtung (202) von dem jeweiligen Stützelement (54, 56) zu dem entsprechenden Seitenaufprallelement (172, 174) erstreckende vorgeformte Wandelemente (184) aufweisen, die zur Stoßenergieabsorption faltbar sind, insbesondere dass Wandelemente (184) der Stoßenergieabsorptionselemente (176, 178) eine Vorprägung dergestalt aufweisen, dass diese zur Stoßenergieabsorption sich längs vorgeformten Falten (186) falten, die quer zur Erstreckungsrichtung (202) der Stoßenergieabsorptionselemente (176, 178) verlaufen.

3. Querträger nach einem der voranstehenden Ansprüche, **dadurch gekennzeichnet, dass** die Stoßenergieabsorptionselemente (176, 178) eine zur Erstreckungsrichtung (202) parallele Mittelachse zumindest teilweise umgreifend ausgebildet sind, insbesondere dass die Stoßenergieabsorptionselemente um die zur Erstreckungsrichtung (202) parallele Mittelachse (182) geschlossen umlaufend ausgebildet sind.

4. Querträger nach einem der voranstehenden Ansprüche, **dadurch gekennzeichnet, dass** die Stoßenergieabsorptionselemente für die Abstützung der Seitenaufprallelemente (172, 174) eine aufprallseitige Querschnittsfläche (198) aufweisen die kleiner ist als eine für die Abstützung an den Stützelementen (54, 56) vorgesehene abstützseitige Querschnittsfläche (196).

5. Querträger nach einem der voranstehenden Ansprüche, **dadurch gekennzeichnet, dass** die Stoßenergieabsorptionselemente sich in ihrer Erstreckungsrichtung (202) von dem jeweiligen Stützelement (54, 56) zu dem jeweiligen Seitenaufprallelement (172, 174) verjüngend ausgebildet sind.

6. Querträger nach einem der voranstehenden Ansprüche, **dadurch gekennzeichnet, dass** sich die Seitenaufprallelemente (172, 174) in einer Voraufprallstellung relativ zu der Zentraleinheit (52) beweglich abstützen, insbesondere dass die Seitenaufprallelemente (172, 174) zur Abstützung an der Zentraleinheit (52) über eine gelenkige Verbindung (217, 219), umfassend insbesondere einerseits einen Fortsatz (212, 214) und andererseits eine Aufnahme (216, 218), beweglich abgestützt sind, insbesondere dass die Fortsätze (212, 214) in der Voraufprallstellung in den Aufnahmen (216, 218) gegen ein Verlassen der Aufnahmen (216, 218) gesichert sind.

7. Querträger nach einem der voranstehenden Ansprüche, **dadurch gekennzeichnet, dass** sich jedes der Seitenaufprallelemente (172, 174) in der Querrichtung (58) über mindestens ein Viertel der Gesamtausdehnung des Querträgers (20) in der Querrichtung (58) erstreckt.

8. Querträger nach einem der voranstehenden Ansprüche, **dadurch gekennzeichnet, dass** sich jedes der Seitenaufprallelemente (172, 174) in der Querrichtung (58) über maximal die Hälfte der Gesamtausdehnung des Querträgers (20) in der Querrichtung (58) erstreckt.

9. Querträger nach einem der voranstehenden Ansprüche, **dadurch gekennzeichnet, dass** jedes der Seitenaufprallelemente (172, 174) mit in der Querrichtung (58) verlaufenden Sicken (170) versehen ist.

10. Querträger nach einem der voranstehenden Ansprüche, **dadurch gekennzeichnet, dass** die Stützelemente (54, 56) Abstützflächen (168) für die Stoßenergieabsorptionselemente (176, 178) aufweisen, die einen Abstand von weniger als 10 mm von Karosserieabstützflächen (166) der Stützelemente (54, 56) aufweisen, mit denen diese sich an den Seitenbereichen (64, 66) der Fahrzeugkarosserie (12) abstützen und/oder dass insbesondere die Abstützflächen (168) für die Stoßenergieabsorptionselemente (176, 178) und die Karosserieabstützflächen (166) der Stützelemente (54, 56) aufeinander gegenüberliegenden Seiten der Stützelemente (54, 56) angeordnet sind und/oder dass insbesondere die Abstützflächen (168) der Stützelemente für die Stoßenergieabsorptionselemente (176, 178) und die Karosserieabstützflächen (166) der Stützelemente (54, 56) auf gegenüberliegenden Seiten einer Fußplatte (122) der Stützelemente (54, 56) angeordnet sind.

11. Querträger nach einem der voranstehenden Ansprüche, **dadurch gekennzeichnet, dass** die Stützelemente (54, 56) außerhalb der Abstützflächen (168) für die Stoßenergieabsorptionselemente (176, 178) Stabilisierungselemente (132, 134, 136, 138) aufweisen, welche die Formstabilität verbessern, insbesondere dass die Stabilisierungselemente (132, 134, 136, 138) sich quer zu der Abstützfläche (168) erstreckende Stege (132, 134, 136, 138) aufweisen und/oder dass insbesondere die Stabilisierungselemente (132, 134, 136, 138) als sich quer zu der Abstützfläche (168) erstreckende Wandabschnitte ausgebildet sind und/oder dass insbesondere die Stabilisierungselemente (132, 134, 136, 138) einstückig an der Fußplatte (122), insbesondere durch Umbiegung, angeformt sind und/oder dass insbesondere die sich quer zu der Abstützfläche (168) erstreckenden Stege (132, 134, 136, 138) sich ausgehend von einer dem Zentralkörper (52) abgewandten Seite in Richtung der Zentraleinheit (52) mit zunehmender Ausdehnung quer zu der Abstützfläche (168) erstrecken und/oder dass insbesondere die sich quer zu der Abstützflächen (168) erstreckenden Stabilisierungselemente (132, 134, 136, 138) einstückig mit der die Abstützfläche (168) und die Karosserieabstützfläche (166) bildenden Fußplatte (122) ausgebildet sind und/oder dass insbesondere zumindest ein Teil des Stabilisierungselemente (134, 136, 138) miteinander verbunden ist.

12. Querträger nach einem der voranstehenden Ansprüche, **dadurch gekennzeichnet, dass** ein Teil der Stabilisierungs-elemente (134, 136, 138) der Stützelemente (54, 56) mit Wänden (72, 74, 76, 78) der kastenförmigen Struktur (70) der Zentraleinheit (52) verbunden ist, insbesondere dass die miteinander verbundenen Stabilisierungselemente (134, 136, 138) mit Wänden (72, 74, 76, 78) der kastenförmigen Struktur (70) verbunden ist und/oder dass insbesondere die kastenförmige Struktur (70) der Zentraleinheit (52) eine fahrbahnzugewandte Wand (76) aufweist.

13. Querträger nach einem der voranstehenden Ansprüche, **dadurch gekennzeichnet, dass** die kastenförmige Struktur (70) mindestens eine Wand (72, 74, 76, 78) aufweist, die mit mindestens einem Ausschnitt (312, 322, 324, 326, 332, 336) versehen ist, insbesondere dass der mindestens eine Ausschnitt (312, 322, 324, 326, 332, 336) eine flächenhafte Ausdehnung aufweist, die in jeder Richtung maximal einem 2-fachen der Flächenausdehnung eines diesen umgebenden Flächenbereichs (313, 325, 327, 334, 338) in der jeweiligen Richtung entspricht und/oder dass insbesondere der mindestens eine Ausschnitt (312, 322, 324, 326, 332, 336) allseits von dem Flächenbereich (313, 325, 327, 334, 338) umgeben ist und/oder dass insbesondere der mindestens eine Ausschnitt (312, 322, 324, 326, 332, 336) eine Außenkontur mit einer im Wesentlichen runden und/oder ovalen Grundform aufweisen und/oder dass insbesondere der mindestens eine Ausschnitt (312, 322, 324, 326, 332, 336) bezogen auf den diesen umgebenden Flächenbereich (313, 325, 327, 332, 338) einen relativ zu diesem Flächenbereich (352) hochgestellten Randbereich (354) aufweist und/oder dass insbesondere der hochgestellte Randbereich (354) quer zu dem diesen umgebenden Flächenbereich (313, 325, 327, 332, 338) eine Höhe aufweist, die mindestens dem zweifachen einer Materialdicke des diesen umgebenden Flächenbereichs (313, 325, 327, 332, 338) entspricht.

14. Querträger nach Anspruch 12 oder 13, **dadurch gekennzeichnet, dass** mindestens ein Teil der Wände (72, 74, 76, 78) der kastenförmigen Struktur (70) eine durch Umformen erhöhte Steifigkeit gegen Deformationen aufweist, insbesondere dass mindestens eine der Wände (72, 74, 76, 78) der kastenförmigen Struktur (70) eine parallel zu einer vertikalen Längsmittelebene (VL) verlaufende Biegelinie (90) aufweist und/oder dass insbesondere mindestens eine der Wände (72, 74, 76, 78) mindestens eine eingeprägte Sicke (114, 362, 364, 366, 368) aufweist und/oder dass insbesondere mindestens eine der Wände (72, 74, 76, 78) mindestens eine eingeprägte Sicke (114) aufweist, die sich in der Querrichtung (Q) zur vertikalen Längsmittelebene (VL) erstreckt und/oder dass insbesondere mindestens eine der Wände (72, 74, 76, 78) in der Querrichtung (Q) der kastenförmigen Struktur (70) aufeinanderfolgend angeordnete eingeprägte Sicken (362, 364, 366, 368) aufweist und/oder dass insbesondere die Sicken (362, 364, 366, 368) geneigt zu der vertikalen Längsmittelebene (LV) verlaufen und/oder dass insbesondere in der Querrichtung (Q) zur vertikalen Längsmittelebene (VL) aufeinanderfolgende Sicken (362, 364, 366, 368) quer zueinander verlaufen.

15. Querträger nach einem der voranstehenden Ansprüche, **dadurch gekennzeichnet, dass** insbesondere eine fahrbahnzugewandte Wand (76) der Zentraleinheit (52) eine Öffnung (84) aufweist, durch welche das Anhängeelement (40) mit der Aufnahmeeinheit (260, 260') einsetzbar ist und/oder dass insbesondere das Anhängeelement (40) in seiner Arbeitsstellung (A) die Öffnung (84) durchgreift und/oder dass insbesondere das Anhängeelement (40) in einer Ruhestellung (R) im Wesentlichen in dem Innenraum (82) der kastenförmigen Struktur (70) der Zentraleinheit (52) angeordnet ist.

## Claims

1. An impact-absorbing cross member (20) which is mountable under a bumper unit (16) of a vehicle body (12) on a rear region (14) thereof, wherein the cross member (20) extends in a transverse direction (58) running parallel to the bumper unit (16) and has support elements (54, 56) arranged at the ends for support on side regions (64, 66) of the vehicle body (12), and wherein the support elements (54, 56) are connected to one another by a central unit (52) of the cross member (20), wherein side impact elements (172, 174) are provided on both sides of the central unit (52) so as to be movable relative thereto, said side impact elements being supported on the support elements (54, 56) of the cross member (20) by means of impact energy absorption elements (176, 178), wherein the central unit (52) comprises a box-shaped structure (70), wherein the box-shaped structure (70) of the central unit (52) has a wall (72) facing away from the vehicle in the direction of travel and wherein the box-shaped structure (70) of the central unit (52) has a wall (78) facing away from the roadway, **characterized in that** the box-shaped structure (70) of the central unit (52) has a wall (74) facing the vehicle, as viewed in the direction of travel,
**in that** the central unit (52) is formed in such a way that an attachment element (40) for a trailer or a load carrier is mountable on it and that the forces transmitted by the attachment element (40) to the central unit (52) are transmitted from the central unit (52) to the support elements (54, 56) and from these to the side regions (64, 66) of the vehicle body (12), **in that** the box-shaped structure (70) of the central unit (52) carries a receiving unit (260, 260') for the attachment element (40), **in that** the receiving unit (260, 260') for the attachment element (40) is arranged in the central unit (52) and **in that** in particular the receiving unit (260, 260') for the attachment element (40) is arranged in an interior space (82) of the central unit (52).

2. A cross member in accordance with claim 1, **characterized in that** the impact energy absorption elements (176, 178) have pre-formed wall elements (184) extending in a direction of extent (202) from the respective support element (54, 56) to the corresponding side impact element (172, 174), which wall elements are foldable for impact energy absorption, in particular **in that** wall elements (184) of the impact energy absorption elements (176, 178) have a pre-stamping in such a way that these fold along pre-formed folds (186) for impact energy absorption, which folds extend transversely to the direction of extent (202) of the impact energy absorption elements (176, 178).

3. A cross member in accordance with the preceding claims, **characterized in that** the impact energy absorption elements (176, 178) are configured to at least partially surround a central axis parallel to the direction of extent (202), in particular **in that** the impact energy absorption elements have a closed peripheral form around the central axis (182) parallel to the direction of extent (202).

4. A cross member in accordance with the preceding claims, **characterized in that** the impact energy absorption elements for supporting the side impact elements (172, 174) have an impact-side cross-sectional area (198) which is smaller than a support-side cross-sectional area (196) provided for the support on the support elements (54, 56).

5. A cross member in accordance with the preceding claims, **characterized in that** the impact energy absorption elements are configured to taper in their direction of extent (202) from the respective support element (54, 56) to the respective side impact element (172, 174).

6. A cross member in accordance with the preceding claims, **characterized in that** the side impact elements (172, 174), in a pre-impact position, are movably supported relative to the central unit (52), in particular **in that** the side impact elements (172, 174) are movably supported for support on the central unit (52) by means of an articulated connection (217, 219), comprising in particular on the one hand an extension (212, 214) and on the other hand a receptacle (216, 218), in particular **in that** the extensions (212, 214), in the pre-impact position, are secured in the receptacles (216, 218) against leaving the receptacles (216, 218).

7. A cross member in accordance with the preceding claims, **characterized in that** each of the side impact elements (172, 174) extends in the transverse direction (58) over at least one quarter of the total extent of the cross member (20) in the transverse direction (58).

8. A cross member in accordance with the preceding claims, **characterized in that** each of the side impact elements (172, 174) extends in the transverse direction (58) over a maximum of half the total extent of the cross member (20) in the transverse direction (58).

9. A cross member in accordance with the preceding claims, **characterized in that** each of the side impact elements (172, 174) is provided with beads (170) running in the transverse direction (58).

10. A cross member in accordance with the preceding claims, **characterized in that** the support elements (54, 56) have support surfaces (168) for the impact energy absorption elements (176, 178) which are at a spacing of less than 10 mm from body support surfaces (166) of the support elements (54, 56) by which these are supported on the side regions (64, 66) of the vehicle body (12) and/or **in that** in particular the support surfaces (168) for the impact energy absorption elements (176, 178) and the body support surfaces (166) of the support elements (54, 56) are arranged on opposite sides of the support elements (54, 56) and/or **in that** in particular the support surfaces (168) of the support elements for the impact energy absorption elements (176, 178) and the body support surfaces (166) of the support elements (54, 56) are arranged on opposite sides of a base plate (122) of the support elements (54, 56).

11. A cross member in accordance with the preceding claims, **characterized in that** the support elements (54, 56) have stabilizing elements (132, 134, 136, 138) outside the support surfaces (168) for the impact energy absorption elements (176, 178), which stabilizing elements improve the dimensional stability, in particular **in that** the stabilizing elements (132, 134, 136, 138) have webs (132, 134, 136, 138) extending transversely to the support surface (168) and/or **in that** in particular the stabilizing elements (132, 134, 136, 138) are formed as wall portions extending transversely to the support surface (168) and/or **in that** in particular the stabilizing elements (132, 134, 136, 138) are formed in one piece on the base plate (122), in particular by bending and/or **in that** in particular the webs (132, 134, 136, 138) extending transversely to the support surface (168) extend, starting from a side facing away from the central body (52), in the direction of the central unit (52) with increasing extent transversely to the support surface (168) and/or **in that** in particular the stabilizing elements (132, 134, 136, 138) extending transversely to the support surfaces (168) are formed integrally with the base plate (122) forming the support surface (168) and the body support surface (166) and/or in that in particular at least some of the stabilizing elements (134, 136, 138) are connected to each other.

12. A cross member in accordance with the preceding claims, **characterized in that** some of the stabilizing elements (134, 136, 138) of the support elements (54, 56) are connected to walls (72, 74, 76, 78) of the box-shaped structure (70) of the central unit (52), in particular **in that** the interconnected stabilizing elements (134, 136, 138) are connected to walls (72, 74, 76, 78) of the box-shaped structure (70) and/or **in that** in particular the box-shaped structure (70) of the central unit (52) has a wall (76) facing the roadway.

13. A cross member in accordance with the preceding claims, **characterized in that** the box-shaped structure (70) comprises at least one wall (72, 74, 76, 78) provided with at least one cut-out (312, 322, 324, 326, 332, 336), in particular **in that** the at least one cut-out (312, 322, 324, 326, 332, 336) has an areal extent which corresponds in each direction to a maximum of 2 times the areal extent of a surface region (313, 325, 327, 332, 338) surrounding it in the respective direction and/or **in that** in particular the at least one cut-out (312, 322, 324, 326, 332, 336) is surrounded on all sides by the surface region (313, 325, 327, 334, 338) and/or **in that** in particular the at least one cut-out (312, 322, 324, 326, 332, 336) has an outer contour with a substantially round and/or oval basic shape and/or **in that** in particular the at least one cut-out (312, 322, 324, 326, 332, 336) has an edge region (354) which, in relation to the surface region (313, 325, 327, 334, 338) surrounding said cut-out, is raised relative to this surface region (352) and/or **in that** in particular the raised edge region (354) has a height transverse to the surface region (313, 325, 327, 332, 338) surrounding it which corresponds to at least twice the material thickness of the surface region (313, 325, 327, 332, 338) surrounding it.

14. A cross member in accordance with claim 12 or 13, **characterized in that** at least a part of the walls (72, 74, 76, 78) of the box-shaped structure (70) has an increased rigidity against deformation as a result of having been reshaped, in particular **in that** at least one of the walls (72, 74, 76, 78) of the box-shaped structure (70) has a bending line (90) running parallel to the vertical longitudinal center plane (VL) and/or **in that** in particular at least one of the walls (72, 74, 76, 78) has at least one stamped bead (114, 362, 364, 366, 368) and/or **in that** in particular at least one of the walls (72, 74, 76, 78) has at least one stamped bead (114) which extends in the transverse direction (Q) to the vertical longitudinal center plane (VL) and/or **in that** in particular at least one of the walls (72, 74, 76, 78) has successively arranged stamped beads (362, 364, 366, 368) in the transverse direction (Q) of the box-shaped structure (70) and/or **in that** in particular the beads (362, 364, 366, 368) run inclined to the vertical longitudinal center plane (LV) and/or **in that** in particular successive beads (362, 364, 366, 368) run transversely to one another in the transverse direction (Q) to the vertical longitudinal center plane (VL).

15. A cross member in accordance with the preceding claims, **characterized in that** a wall (76) of the central unit (52) facing the roadway has an opening (84), through which the attachment element (40) with the receiving unit (260, 260') is insertable and/or **in that** in particular the attachment element (40) in its working position (A) extends through the opening (84) and/or **in that** in particular the attachment element (40) is arranged substantially in the interior space (82) of the box-shaped structure (70) of the central unit (52) in a rest position (R).

## Revendications

1. Traverse (20) d'absorption de chocs, qui peut être montée sous une unité de pare-chocs (16) d'une carrosserie de véhicule (12) sur une zone arrière (14) de celle-ci, dans laquelle la traverse (20) s'étend dans une direction transversale (58) s'étendant parallèlement à l'unité de pare-chocs (16) et présente des éléments d'appui (54, 56) disposés côté extrémité destinés à prendre appui sur des zones latérales (64, 66) de la carrosserie de véhicule (12), et dans laquelle les éléments d'appui (54, 56) sont reliés les uns aux autres par une unité centrale (52) de la traverse (20),
dans laquelle sont prévus des deux côtés de l'unité centrale (52) des éléments de collision latérale (172, 174) disposés de manière mobile par rapport à celle-ci, qui prennent appui sur des éléments d'absorption d'énergie de choc (176, 178) sur les éléments d'appui (54, 56) de la traverse (20), dans laquelle l'unité centrale (52) comprend une structure en forme de caisson (70), dans laquelle la structure en forme de caisson (70) de l'unité centrale (52) présente dans le sens de la marche une paroi (72) opposée au véhicule et dans laquelle la structure en forme de caisson (70) de l'unité centrale (52) présente une paroi (78) opposée à la chaussée, **caractérisée en ce que** la structure en forme de caisson (70) de l'unité centrale (52) présente, vue dans le sens de la marche, une paroi (74) tournée vers le véhicule,
que l'unité centrale (52) est réalisée de telle manière qu'un élément d'attelage (40) pour une remorque ou un porte-charges peut être monté sur celle-ci, que les forces transmises par l'élément d'attelage (40) à l'unité centrale (52) sont transmises de l'unité centrale (52) aux éléments d'appui (54, 56) et de ceux-ci aux zones latérales (64, 66) de la carrosserie de véhicule (12), que la structure réalisée en forme de caisson (70) de l'unité centrale (52) supporte une unité de réception (260, 260') pour l'élément d'attelage (40), que l'unité de réception (260, 260') pour l'élément d'attelage (40) est disposée dans l'unité centrale (52) et qu'en particulier l'unité de réception (260, 260') pour l'élément d'attelage (40) est disposée dans un habitacle (82) de l'unité centrale (52).

2. Traverse selon la revendication 1, **caractérisée en ce que** les éléments d'absorption d'énergie de choc (176, 178) présentent des éléments de paroi préformés (184) s'étendant dans une direction d'extension (202) depuis l'élément d'appui (54, 56) respectif vers l'élément de collision latérale (172, 174) correspondant, qui peuvent être pliés pour absorber l'énergie de choc, en particulier que des éléments de paroi (184) des éléments d'absorption d'énergie de choc (176, 178) présentent un préestampage tel que ceux-ci se plient le long de plis préformés (186) pour l'absorption d'énergie de choc, lesquels s'étendent transversalement à la direction d'extension (202) des éléments d'absorption d'énergie de choc (176, 178).

3. Traverse selon l'une quelconque des revendications précédentes, **caractérisée en ce que** les éléments d'absorption d'énergie de choc (176, 178) sont réalisés de manière à entourer au moins en partie un axe central parallèle à la direction d'extension (202), en particulier que les éléments d'absorption d'énergie de choc sont réalisés en périphérie de manière fermée autour de l'axe central (182) parallèle à la direction d'extension (202).

4. Traverse selon l'une quelconque des revendications précédentes, **caractérisée en ce que** les éléments d'absorption d'énergie de choc pour l'appui des éléments de collision latérale (172, 174) présentent une surface de section transversale (198) côté choc qui est plus petite qu'une surface de section transversale (196) côté appui prévue pour l'appui sur les éléments d'appui (54, 56).

5. Traverse selon l'une quelconque des revendications précédentes, **caractérisée en ce que** les éléments d'absorption d'énergie de choc sont réalisés de manière à rétrécir dans leur direction d'extension (202) depuis l'élément d'appui (54, 56) respectif vers l'élément de collision latérale (172, 174) respectif.

6. Traverse selon l'une quelconque des revendications précédentes, **caractérisée en ce que** les éléments de collision latérale (172, 174) prennent appui de manière mobile dans une position de précollision par rapport à l'unité centrale (52), en particulier que les éléments de collision latérale (172, 174) destinés à prendre appui sur l'unité centrale (52) sont soutenus de manière mobile par l'intermédiaire d'une liaison articulée (217, 219), comprenant en particulier d'une part un prolongement (212, 214) et d'autre part un logement (216, 218), en particulier que les prolongements (212, 214) sont bloqués dans la position de précollision dans les logements (216, 218) pour éviter de quitter les logements (216, 218).

7. Traverse selon l'une quelconque des revendications précédentes, **caractérisée en ce que** chacun des éléments de collision latérale (172, 174) s'étend dans la direction transversale (58) sur au moins un quart de l'extension totale de la traverse (20) dans la direction transversale (58).

8. Traverse selon l'une quelconque des revendications précédentes, **caractérisée en ce que** chacun des éléments de collision latérale (172, 174) s'étend dans la direction transversale (58) sur au maximum la moitié de l'extension totale de la traverse (20) dans la direction transversale (58).

9. Traverse selon l'une quelconque des revendications précédentes, **caractérisée en ce que** chacun des éléments de collision latérale (172, 174) est pourvu de moulures (170) s'étendant dans la direction transversale (58).

10. Traverse selon l'une quelconque des revendications précédentes, **caractérisée en ce que** les éléments d'appui (54, 56) présentent des surfaces de soutien (168) pour les éléments d'absorption d'énergie de choc (176, 178), qui présentent une distance inférieure à 10 mm de surfaces de soutien de carrosserie (166) des éléments d'appui (54, 56) avec lesquelles ceux-ci prennent appui sur les zones latérales (64, 66) de la carrosserie de véhicule (12) et/ou qu'en particulier les surfaces de soutien (168) pour les éléments d'absorption d'énergie de choc (176, 178) et que les surfaces de soutien de carrosserie (166) des éléments d'appui (54, 56) sont disposées sur des côtés opposés des éléments d'appui (54, 56) et/ou qu'en particulier les surfaces de soutien (168) des éléments d'appui pour les éléments d'absorption d'énergie de choc (176, 178) et les surfaces de soutien de carrosserie (166) des éléments d'appui (54, 56) sont disposées sur des côtés opposés d'une plaque de base (122) des éléments d'appui (54, 56).

11. Traverse selon l'une quelconque des revendications précédentes, **caractérisée en ce que** les éléments d'appui (54, 56) présentent à l'extérieur des surfaces de soutien (168) pour les éléments d'absorption d'énergie de choc (176, 178) des éléments de stabilisation (132, 134, 136, 138), qui améliorent la stabilité de forme, en particulier que les éléments de stabilisation (132, 134, 136, 138) présentent des nervures (132, 134, 136, 138) s'étendant transversalement à la surface de soutien (168) et/ou qu'en particulier les éléments de stabilisation (132, 134, 136, 138) sont réalisés en tant que sections de paroi s'étendant transversalement à la surface de soutien (168) et/ou qu'en particulier les éléments de stabilisation (132, 134, 136, 138) sont formés d'un seul tenant sur la plaque d'appui (122), en particulier par cintrage, et/ou qu'en particulier les nervures (132, 134, 136, 138) s'étendant transversalement à la surface de soutien (168) s'étendent en partant d'un côté opposé au corps central (52) en direction de l'unité centrale (52) à mesure que l'extension augmente transversalement à la surface de soutien (168) et/ou qu'en particulier les éléments de stabilisation (132, 134, 136, 138) s'étendant transversalement à la surface de soutien (168) sont réalisés d'un seul tenant avec la plaque de base (122) formant la surface de soutien (168) et la surface de soutien de carrosserie (166), et/ou qu'en particulier au moins certains des éléments de stabilisation (134, 136, 138) sont reliés entre eux.

12. Traverse selon l'une quelconque des revendications précédentes, **caractérisée en ce que** certains des éléments de stabilisation (134, 136, 138) des éléments d'appui (54, 56) sont reliés à des parois (72, 74, 76, 78) de la structure en forme de caisson (70) de l'unité centrale (52), en particulier que les éléments de stabilisation (134, 136, 138) reliés entre eux sont reliés à des parois (72, 74, 76, 78) de la structure en forme de caisson (70) et/ou qu'en particulier la structure en forme de caisson (70) de l'unité centrale (52) présente une paroi (76) tournée vers la chaussée.

13. Traverse selon l'une quelconque des revendications précédentes, **caractérisée en ce que** la structure en forme de caisson (70) présente au moins une paroi (72, 74, 76, 78), qui est pourvue d'au moins une découpe (312, 322, 324, 326, 332, 336), en particulier que l'au moins une découpe (312, 322, 324, 326, 332, 336) présente une extension superficielle qui, dans chaque direction, correspond au maximum à 2 fois l'extension superficielle d'une zone de surface (313, 325, 327, 334, 338) les entourant dans la direction respective et/ou qu'en particulier l'au moins une découpe (312, 322, 324, 326, 332, 336) est entourée de toutes parts par la zone de surface (313, 325, 327, 334, 338) et/ou qu'en particulier l'au moins une découpe (312, 322, 324, 326, 332, 336) présente un contour extérieur avec une forme de base essentiellement ronde et/ou ovale et/ou qu'en particulier l'au moins une découpe (312, 322, 324, 326, 332, 336) par rapport à la zone de surface (313, 325, 327, 332, 338) entourant celle-ci présente une zone de bord (354) relevée par rapport à ladite zone de surface (352) et/ou qu'en particulier la zone de bord (354) relevée présente transversalement à la zone de surface (313, 325, 327, 332, 338) entourant celle-ci une hauteur, qui correspond au moins à deux fois une épaisseur de matériau de la zone de surface (313, 325, 327, 332, 338) entourant celle-ci.

14. Traverse selon la revendication 12 ou 13, **caractérisée en ce qu'**au moins une partie des parois (72, 74, 76, 78) de la structure en forme de caisson (70) présente une rigidité accrue par mise en forme contre les déformations, en particulier qu'au moins une des parois (72, 74, 76, 78) de la structure en forme de caisson (70) présente une ligne de flexion (90) s'étendant parallèlement à un plan médian longitudinal vertical (VL) et/ou qu'en particulier au moins une des parois (72, 74, 76, 78) présente au moins une moulure (114, 362, 364, 366, 368) estampée et/ou qu'en particulier au moins une des parois (72, 74, 76, 78) présente au moins une moulure (114) estampée, qui s'étend dans la direction transversale (Q) par rapport au plan médian longitudinal vertical (VL) et/ou qu'en particulier au moins une des parois (72, 74, 76, 78) présente des moulures (362, 364, 366, 368) estampées disposées successivement dans la direction transversale (Q) de la structure en forme de caisson (70) et/ou qu'en particulier les moulures (362, 364, 366, 368) s'étendent de manière inclinée par rapport au plan médian longitudinal vertical (LV) et/ou que des moulures (362, 364, 366, 368) successives s'étendent transversalement les unes par rapport aux autres, en particulier dans la direction transversale (Q) par rapport au plan médian longitudinal vertical (VL).

15. Traverse selon l'une quelconque des revendications précédentes, **caractérisée en ce qu'**en particulier une paroi (76) tournée vers la chaussée de l'unité centrale (52) présente une ouverture (84) par laquelle l'élément d'attelage (40) peut être utilisé avec l'unité de réception (260, 260') et/ou qu'en particulier l'élément d'attelage (40) traverse dans sa position de travail (A) l'ouverture (84) et/ou qu'en particulier l'élément d'attelage (40) est disposé dans une position de repos (R) sensiblement dans l'espace intérieur (82) de la structure en forme de caisson (70) de l'unité centrale (52).
